(19)

**Europäisches Patentamt**
**European Patent Office**
**Office européen des brevets**

(11) **EP 4 727 069 A1**

(12) **EUROPEAN PATENT APPLICATION**
published in accordance with Art. 153(4) EPC

(43) Date of publication:
**15.04.2026 Bulletin 2026/16**

(51) International Patent Classification (IPC):
*H04L 25/02* (2006.01)　　*H04B 7/06* (2006.01)

(21) Application number: **24818582.9**

(52) Cooperative Patent Classification (CPC):
**H04B 7/0456; H04B 7/06; H04L 5/00; H04L 25/02**

(22) Date of filing: **31.05.2024**

(86) International application number:
**PCT/CN2024/096791**

(87) International publication number:
**WO 2024/251050 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.06.2023　CN 202310685530**

(71) Applicant: **Huawei Technologies Co., Ltd.
Shenzhen, Guangdong 518129 (CN)**

(72) Inventors:
- **YE, Chencheng
  Shenzhen, Guangdong 518129 (CN)**
- **YUAN, Yiling
  Shenzhen, Guangdong 518129 (CN)**
- **WANG, Xiaohan
  Shenzhen, Guangdong 518129 (CN)**
- **JIN, Huangping
  Shenzhen, Guangdong 518129 (CN)**

(74) Representative: **Gill Jennings & Every LLP
The Broadgate Tower
20 Primrose Street
London EC2A 2ES (GB)**

(54) **METHOD FOR DETERMINING CHANNEL STATE INFORMATION AND COMMUNICATION APPARATUS**

(57) This application provides a method for determining channel state information and a communication apparatus. The method provided in this application includes: sending first indication information, where the first indication information indicates a position for sending a downlink reference signal; receiving channel statistics information, where the channel statistics information is determined based on the downlink reference signal; sending second indication information, where the second indication information indicates a position for sending an uplink reference signal; and receiving the uplink reference signal, and determining channel state information based on the uplink reference signal and the channel statistics information. According to the method provided in this application, a terminal device sends the uplink reference signal based on an indication of a network device, and therefore a large quantity of time-frequency resources do not need to be occupied. In addition, the network device calculates the channel state information based on the uplink reference signal and the channel statistics information, and therefore, the terminal device is not required to have high calculation complexity.

Method 600

FIG. 6

## Description

This application claims priority to Chinese Patent Application No. 202310685530.3, filed with the China National Intellectual Property Administration on June 9, 2023 and entitled " METHOD FOR DETERMINING CHANNEL STATE INFORMATION AND COMMUNICATION APPARATUS", which is incorporated herein by reference in its entirety.

## TECHNICAL FIELD

This application relates to the field of communication technologies, and more specifically, to a method for determining channel state information and a communication apparatus.

## BACKGROUND

In 5th generation (5th generation, 5G) communication systems, the massive (Massive) multiple-input multiple-output (multiple input multiple output, MIMO) technology plays an important role in spectrum efficiency of the systems. When the MIMO technology is used, before sending downlink data to a terminal device, a network device needs to precode the data based on channel state information.

In time division duplex (Time division duplex, TDD) systems, uplink and downlink channels have reciprocity, and a network device may estimate channel state information of a downlink channel by using an uplink pilot sent by a terminal device. However, such a pilot measurement manner needs to consume a large quantity of time-frequency resources.

In frequency division duplex (frequency division duplex, FDD) systems, a network device may send a downlink pilot to a terminal device, so that the terminal device can calculate channel state information of a downlink channel based on the downlink pilot, and feed back the channel state information of the downlink channel to the network device. This manner requires high calculation complexity of the terminal device.

## SUMMARY

This application provides a method for determining channel state information and a communication apparatus, to resolve a problem that a time-frequency resource is wasted in a manner of directly measuring channel state information by using a pilot, and a problem that a high computational complexity imposed on a terminal device when the channel state information is calculated by the terminal device.

According to a first aspect, a method for determining channel state information is provided. The method provided in the first aspect may be performed by a network device, or may be performed by a chip configured in the network device. This is not limited in this application.

Specifically, the method includes: sending first indication information, where the first indication information indicates a position for sending a downlink reference signal; receiving channel statistics information, where the channel statistics information is determined based on the downlink reference signal; sending second indication information, where the second indication information indicates a position for sending an uplink reference signal; and receiving the uplink reference signal, and determining channel state information based on the uplink reference signal and the channel statistics information.

According to the method provided in the first aspect, the network device may indicate, to a terminal device, the position for sending the downlink reference signal, so that the terminal device can determine the channel statistics information based on the received downlink reference signal, and the network device may further indicate, to the terminal device, the position for sending the uplink reference signal. The terminal device sends the uplink reference signal based on the indication of the network device, and therefore, does not need to occupy a large quantity of time-frequency resources. Finally, the network device determines the channel state information based on the received uplink reference signal and the channel statistics information. Therefore, a calculation complexity requirement for the terminal device is not high.

According to a second aspect, a method for determining channel state information is provided. The method provided in the second aspect may be performed by a terminal device, or may be performed by a chip configured in the terminal device. This is not limited in this application.

Specifically, the method includes: receiving first indication information, where the first indication information indicates a position for sending a downlink reference signal; sending channel statistics information, where the channel statistics information is determined based on the downlink reference signal; receiving second indication information, where the second indication information indicates a position for sending an uplink reference signal; and sending the uplink reference signal based on the second indication information.

According to the method provided in the second aspect, the terminal device receives the downlink reference signal based on the position that is indicated by a network device and that is for sending the downlink reference signal, and determines the channel statistics information based on the received downlink reference signal. Then, the terminal device sends the uplink reference signal to the network device based on the position that is indicated by the network device and that is for sending the uplink reference signal, to resolve a problem of a waste of time-frequency resources caused because the terminal device needs to send a large quantity of reference channels. The terminal device may send the channel statistics information to the network device, so that the network device can determine the channel state information based on the uplink reference signal and the channel statistics information sent by the terminal device, to alleviate a high requirement for calculation complexity of the terminal device.

In a possible implementation of the first aspect or the second aspect, the first indication information includes indication information of at least one time-frequency-space unit group, indication information of a first time-frequency-space unit group includes at least one of the following: indication information of $N_1$ space domain units, indication information of $N_2$ frequency domain units, and indication information of $N_3$ time domain units, and the first time-frequency-space unit group is any one of the at least one time-frequency-space unit group, where $N_1 \geq 1$, $N_1$ is an integer, $N_2 \geq 1$, $N_2$ is an integer, $N_3 \geq 1$, and $N_3$ is an integer. In this implementation, the network device may send indication information of a time-frequency-space unit group to the terminal device, so that the terminal device can determine the position in which the network device sends the downlink reference signal.

In a possible implementation of the first aspect or the second aspect, the indication information of the $N_1$ space domain units includes indication information of $N_1$ combinations of a reference signal port (or transmit port) and a receive port, or indication information of $M_1$ reference signal ports (or transmit ports) and indication information of $M_2$ receive ports, where $M_1 \times M_2 = N_1$.

In a possible implementation of the first aspect or the second aspect, the indication information of the $N_1$ space domain units may indicate a combination of a transmit port and a receive port corresponding to each space domain unit, or indicate a combination of a reference signal port and a receive port corresponding to each space domain unit; or the indication information of the $N_1$ space domain units may indicate only a transmit port corresponding to each space domain unit, or indicate a reference signal port corresponding to each space domain unit.

In a possible implementation of the first aspect or the second aspect, the indication information of the $N_2$ frequency domain units includes a position of each frequency domain unit, or the indication information may include at least one of a start position of a frequency domain unit, a frequency domain unit offset, and a quantity of frequency domain units.

For example, when a value of $N_2$ is 5, the position of each frequency domain unit may be a position of the 1st subband, a position of the 3rd subband, a position of the 5th subband, a position of the 7th subband, and a position of the 9th subband. That is, the position of each frequency domain unit may be directly indicated in this manner.

For another example, the indication information may be the start position of the frequency domain unit, that is, a position of the 1st subband; the frequency domain unit offset, that is, an interval of one subband between adjacent frequency domain units, or a subband sequence number difference of 2 between adjacent frequency domain units; and the quantity of frequency domain units, which is 5. That is, the position of each frequency domain unit may also be indirectly indicated in this indication manner.

In a possible implementation of the first aspect or the second aspect, the indication information of the $N_3$ time domain units includes a position of each time domain unit, or the indication information may include at least one of a start position of a time domain unit, a time domain unit offset, and a quantity of time domain units.

For example, when a value of $N_3$ is 5, the position of each time domain unit may be a position of the 1st OFDM symbol, a position of the 3rd OFDM symbol, a position of the 5th OFDM symbol, a position of the 7th OFDM symbol, and a position of the 9th OFDM symbol. That is, the position of each time domain unit may be directly indicated in this manner.

For another example, the indication information may be the start position of the time domain unit, that is, a position of the 1st OFDM symbol; the time domain unit offset, that is, an interval of one OFDM symbol between adjacent time domain units, or an OFDM symbol sequence number difference of 2 between adjacent time domain units; and the quantity of time domain units, which is 5. That is, the position of each time domain unit may also be indirectly indicated in this indication manner.

In a possible implementation of the first aspect or the second aspect, the first indication information further includes a frequency domain offset and/or a time domain offset between a second time-frequency-space unit group and the first time-frequency-space unit group, and the second time-frequency-space unit group is a time-frequency-space unit group other than the first time-frequency-space unit group in the at least one time-frequency-space unit group.

For example, frequency domain units corresponding to the first time-frequency-space unit group are the 1st, 3rd, and 4th RBs, and offsets of the 2nd frequency domain unit and the 3rd frequency domain unit relative to the 1st frequency domain unit are 2 RBs and 3 RBs respectively. In this case, frequency domain units corresponding to the second time-frequency-space unit group are the 2nd, 4th, and 5th RBs. That is, offsets of the 2nd frequency domain unit and the 3rd frequency domain unit relative to the 1st frequency domain unit are also 2 RBs and 3 RBs respectively.

It may be understood that different time-frequency-space unit groups have a same quantity of frequency domain units and a same frequency domain unit offset, but may have different frequency domain unit positions; different time-frequency-space unit groups have a same quantity of time domain units and a same time domain unit offset, but may have different time domain unit positions; and different time-frequency-space unit groups have a same quantity of space domain units, but may have different space domain unit positions.

In a possible implementation of the first aspect or the second aspect, the first indication information further includes: indication information of a position of a first reference time-frequency-space unit and indication information of a position of a second reference time-frequency-space unit, the first reference time-frequency-space unit is a time-frequency-space unit in the first time-frequency-space unit group, the second reference time-frequency-space unit is a time-frequency-space unit in a second time-frequency-space unit group, and the second time-frequency-space unit group is a time-frequency-space unit group other than the first time-frequency-space unit group in the at least one time-frequency-space unit group.

For example, the indication information of the first time-frequency-space unit group indicates a transmit port 1 to send downlink signals to receive ports 1, 2, 3, and 4 on the $1^{st}$, $3^{rd}$, $5^{th}$, $7^{th}$, and $9^{th}$ RBs and the $1^{st}$, $3^{rd}$, $5^{th}$, $7^{th}$, and $9^{th}$ OFDM symbols of the $1^{st}$ slot. The reference time-frequency-space unit of the first time-frequency-space unit group indicates the transmit port 1 to send a downlink signal to the receive port 1 on the $1^{st}$ RB and the $1^{st}$ OFDM symbol of the $1^{st}$ slot. The reference time-frequency-space unit of the second time-frequency-space unit group indicates the transmit port 1 to send a downlink signal to the receive port 1 on the $1^{st}$ RB and the $1^{st}$ OFDM symbol of the $11^{th}$ slot. The second time-frequency-space unit group indicates the transmit port 1 to send downlink signals to the receive ports 1, 2, 3, and 4 on the $1^{st}$, $3^{rd}$, $5^{th}$, $7^{th}$, and $9^{th}$ RBs and the $1^{st}$, $3^{rd}$, $5^{th}$, $7^{th}$, and $9^{th}$ OFDM symbols of the $11^{th}$ slot.

In a possible implementation of the first aspect or the second aspect, the channel statistics information includes a channel covariance matrix and/or a channel eigenvector.

In a possible implementation of the first aspect or the second aspect, the second indication information includes indication information of K space-time-frequency units, where K≥1, and K is an integer.

In a possible implementation of the first aspect or the second aspect, the second indication information includes indication information of K space domain units, indication information of K frequency domain units, and indication information of K time domain units, where K≥1, and K is an integer.

In this implementation, the indication information of the K space domain units may directly indicate positions of the K space domain units, or may indicate number indexes of the K space domain units.

For example, when K=2, the network device may indicate to the terminal device that positions of two ports are respectively the $1^{st}$ port and the $3^{rd}$ port, positions of two subbands are respectively the $1^{st}$ subband and the $3^{rd}$ subband, and positions of the two symbols are respectively the $1^{st}$ symbol and the $3^{rd}$ symbol.

For another example, when K is 2 and a total quantity of transmit ports of the terminal device is 4, a total of $C_4^2$ combinations formed by any two of the four ports may be numbered, and the network device may indicate number indexes of the two space domain units to the terminal device.

In a possible implementation of the first aspect or the second aspect, the second indication information includes a first bitmap and indication information of a third time-frequency-space unit group, and the first bitmap indicates positions of K space domain units in the third time-frequency-space unit group, where K≥1, and K is an integer.

It should be noted that a length of the first bitmap is a quantity of space-time-frequency units in a to-be-measured space-time-frequency unit group, and the bitmap has a total of K first values. The first value indicates that a corresponding space-time-frequency unit is one of the K space-time-frequency unit groups.

In a possible implementation of the first aspect or the second aspect, the second indication information is determined based on the channel statistics information. In this implementation, the network device may determine, based on the channel statistics information reported by the terminal device, the position in which the terminal device sends the uplink reference signal, to avoid a waste of time-frequency resources caused because the terminal device needs to send a large quantity of pilots.

In a possible implementation of the first aspect or the second aspect, one part of the first time-frequency-space unit group is on a TDD frequency band, and the other part is on an FDD downlink frequency band. In this implementation, the downlink reference signal may be sent on different frequency bands.

In a possible implementation of the first aspect or the second aspect, the K time-frequency-space units are on the TDD frequency band, and the channel state information includes at least one of the following: channel state information of the TDD frequency band or channel state information of the FDD downlink frequency band. In this implementation, when the uplink reference signal is sent on the TDD frequency band, a part of the downlink reference signal is sent on the TDD frequency band, and the other part is sent on the FDD frequency band. Because of partial reciprocity of FDD, downlink channel state information of the FDD frequency band or uplink channel state information of the TDD frequency band and downlink channel state information of the TDD frequency band may be determined.

According to a third aspect, a communication apparatus is provided. The communication apparatus includes: a sending unit, where the sending unit is configured to send first indication information, and the first indication information indicates a position for sending a downlink reference signal; a receiving unit, where the receiving unit is configured to receive channel statistics information, the channel statistics information is determined based on the downlink reference signal, the sending unit is further configured to send second indication information, and the second indication information indicates a position for sending an uplink reference signal; and a processing unit, configured to determine channel state information based on the received uplink reference signal and the channel statistics information.

The apparatus provided in the third aspect indicates, to a terminal device, the position for sending the downlink reference signal, so that the terminal device can determine the channel statistics information based on the received downlink reference signal, and the network device may further indicate, to the terminal device, the position for sending the uplink reference signal. The terminal device sends the uplink reference signal based on the indication of the network device, and therefore, does not need to occupy a large quantity of time-frequency resources. Finally, the network device determines the channel state information based on the received uplink reference signal and the channel statistics information. Therefore, a calculation complexity requirement for the terminal device is not high.

According to a fourth aspect, a communication apparatus is provided. The communication apparatus includes: a receiving unit, where the receiving unit is configured to receive first indication information, and the first indication information indicates a position for sending a downlink reference signal; and a sending unit, where the sending unit is configured to send channel statistics information, and the channel statistics information is determined based on the downlink reference signal. The receiving unit is further configured to receive second indication information, where the second indication information indicates a position for sending an uplink reference signal; and the sending unit is further configured to send the uplink reference signal based on the second indication information.

The apparatus provided in the fourth aspect receives the downlink reference signal based on the position that is indicated by a network device and that is for sending the downlink reference signal, and determines the channel statistics information based on the received downlink reference signal. Then, the terminal device sends the uplink reference signal to the network device based on the position that is indicated by the network device and that is for sending the uplink reference signal, to resolve a problem of a waste of time-frequency resources caused because the terminal device needs to send a large quantity of reference channels. The terminal device may send the channel statistics information to the network device, so that the network device can determine the channel state information based on the uplink reference signal and the channel statistics information sent by the terminal device, to alleviate a high requirement for calculation complexity of the terminal device.

In a possible implementation of the third aspect or the fourth aspect, the first indication information includes indication information of at least one time-frequency-space unit group, indication information of a first time-frequency-space unit group includes at least one of the following: indication information of $N_1$ space domain units, indication information of $N_2$ frequency domain units, and indication information of $N_3$ time domain units, and the first time-frequency-space unit group is any one of the at least one time-frequency-space unit group, where $N_1 \geq 1$, $N_1$ is an integer, $N_2 \geq 1$, $N_2$ is an integer, $N_3 \geq 1$, and $N_3$ is an integer. In this implementation, the network device may send indication information of a time-frequency-space unit group to the terminal device, so that the terminal device can determine the position in which the network device sends the downlink reference signal.

In a possible implementation of the third aspect or the fourth aspect, the indication information of the $N_1$ space domain units includes indication information of $N_1$ combinations of a reference signal port (or transmit port) and a receive port, or indication information of $M_1$ reference signal ports and indication information of $M_2$ receive ports, where $M_1 \times M_2 = N_1$.

In a possible implementation of the third aspect or the fourth aspect, the indication information of the $N_1$ space domain units may indicate a combination of a transmit port and a receive port corresponding to each space domain unit, or indicate a combination of a reference signal port and a receive port corresponding to each space domain unit; or the indication information of the $N_1$ space domain units may indicate only a transmit port corresponding to each space domain unit, or indicate a reference signal port corresponding to each space domain unit.

In a possible implementation of the third aspect or the fourth aspect, the indication information of the $N_2$ frequency domain units includes a position of each frequency domain unit, or the indication information may include at least one of a start position of a frequency domain unit, a frequency domain unit offset, and a quantity of frequency domain units.

For example, when a value of $N_2$ is 5, the position of each frequency domain unit may be a position of the 1st subband, a position of the 3rd subband, a position of the 5th subband, a position of the 7th subband, and a position of the 9th subband. That is, the position of each frequency domain unit may be directly indicated in this manner.

For another example, the indication information may be the start position of the frequency domain unit, that is, a position of the 1st subband; the frequency domain unit offset, that is, an interval of one subband between adjacent frequency domain units, or a subband sequence number difference of 2 between adjacent frequency domain units; and the quantity of frequency domain units, which is 5. That is, the position of each frequency domain unit may also be indirectly indicated in this indication manner.

In a possible implementation of the third aspect or the fourth aspect, the indication information of the $N_3$ time domain units includes a position of each time domain unit, or the indication information may include at least one of a start position of a time domain unit, a time domain unit offset, and a quantity of time domain units.

For example, when a value of $N_3$ is 5, the position of each time domain unit may be a position of the 1st OFDM

symbol, a position of the 3rd OFDM symbol, a position of the 5th OFDM symbol, a position of the 7th OFDM symbol, and a position of the 9th OFDM symbol. That is, the position of each time domain unit may be directly indicated in this manner.

For another example, the indication information may be the start position of the time domain unit, that is, a position of the 1st OFDM symbol; the time domain unit offset, that is, an interval of one OFDM symbol between adjacent time domain units, or an OFDM symbol sequence number difference of 2 between adjacent time domain units; and the quantity of time domain units, which is 5. That is, the position of each time domain unit may also be indirectly indicated in this indication manner.

In a possible implementation of the third aspect or the fourth aspect, the first indication information further includes a frequency domain offset and/or a time domain offset between a second time-frequency-space unit group and the first time-frequency-space unit group, and the second time-frequency-space unit group is a time-frequency-space unit group other than the first time-frequency-space unit group in the at least one time-frequency-space unit group.

For example, frequency domain units corresponding to the first time-frequency unit are the 1st, 3rd, and 4th RBs, and offsets of the 2nd frequency domain unit and the 3rd frequency domain unit relative to the 1st frequency domain unit are 2 RBs and 3 RBs respectively. In this case, frequency domain units corresponding to the second frequency domain unit group are the 2nd, 4th, and 5th RBs. That is, offsets of the 2nd frequency domain unit and the 3rd frequency domain unit relative to the 1st frequency domain unit are also 2 RBs and 3 RBs respectively.

In a possible implementation of the third aspect or the fourth aspect, the first indication information further includes: indication information of a position of a first reference time-frequency-space unit and indication information of a position of a second reference time-frequency-space unit, the first reference time-frequency-space unit is a time-frequency-space unit in the first time-frequency-space unit group, the second reference time-frequency-space unit is a time-frequency-space unit in a second time-frequency-space unit group, and the second time-frequency-space unit group is a time-frequency-space unit group other than the first time-frequency-space unit group in the at least one time-frequency-space unit group.

For example, the indication information of the first time-frequency-space unit group indicates a transmit port 1 to send downlink signals to receive ports 1, 2, 3, and 4 on the 1st, 3rd, 5th, 7th, and 9th RBs and the 1st, 3rd, 5th, 7th, and 9th OFDM symbols of the 1st slot. The reference time-frequency-space unit of the first time-frequency-space unit group indicates the transmit port 1 to send a downlink signal to the receive port 1 on the 1st RB and the 1st OFDM symbol of the 1st slot. The reference time-frequency-space unit of the second time-frequency-space unit group indicates the transmit port 1 to send a downlink signal to the receive port 1 on the 1st RB and the 1st OFDM symbol of the 11th slot. The second time-frequency-space unit group indicates the transmit port 1 to send downlink signals to the receive ports 1, 2, 3, and 4 on the 1st, 3rd, 5th, 7th, and 9th RBs and the 1st, 3rd, 5th, 7th, and 9th OFDM symbols of the 11th slot.

In a possible implementation of the third aspect or the fourth aspect, the channel statistics information includes a channel covariance matrix and/or a channel eigenvector.

In a possible implementation of the third aspect or the fourth aspect, the second indication information includes indication information of K space-time-frequency units, where $K \geq 1$, and K is an integer.

In a possible implementation of the third aspect or the fourth aspect, the second indication information includes positions of K space domain units, positions of K frequency domain units, and positions of K time domain units, where $K \geq 1$, K is an integer, and $K \leq N_1 \times N_2 \times N_3$.

For example, when a value of K is 2, it indicates that the network device indicates the terminal device to send uplink signals in positions of two ports, positions of two frequency domain units, and positions of two time domain units.

It should be understood that the positions of the two ports may be directly indicated, for example, the 1st port and the 3rd port. Alternatively, the positions of the two ports may be indirectly indicated. For example, a number of a combination of the two ports is indicated.

In a possible implementation of the third aspect or the fourth aspect, the second indication information includes the indication information of the K space-time-frequency units, where $K \geq 1$, K is an integer, and $K \leq N_1 \times N_2 \times N_3$.

In this implementation, the indication information of the K space domain units may directly indicate positions of the K space domain units, or may indicate number indexes of the K space domain units.

For example, when K=2, the network device may indicate to the terminal device that positions of two ports are respectively the 1st port and the 3rd port, positions of two subbands are respectively the 1st subband and the 3rd subband, and positions of the two symbols are respectively the 1st symbol and the 3rd symbol.

For another example, when K is 2 and a total quantity of transmit ports of the terminal device is 4, a total of $C_4^2$ combinations formed by any two of the four ports may be numbered, and the network device may indicate number indexes of the two space domain units to the terminal device.

In a possible implementation of the third aspect or the fourth aspect, the second indication information includes a first bitmap and indication information of a third time-frequency-space unit group, and the first bitmap indicates positions of K space domain units in the third time-frequency-space unit group, where $K \geq 1$, and K is an integer.

It should be noted that a length of the first bitmap is a quantity of space-time-frequency units in a to-be-measured space-time-frequency unit group, and the bitmap has a total of K first values. The first value indicates that a corresponding space-time-frequency unit is one of the K space-time-frequency unit groups.

In a possible implementation of the third aspect or the fourth aspect, the second indication information is determined based on the channel statistics information. In this implementation, the network device may determine, based on the channel statistics information reported by the terminal device, the position in which the terminal device sends the uplink reference signal, to avoid a waste of time-frequency resources caused because the terminal device needs to send a large quantity of pilots.

In a possible implementation of the third aspect or the fourth aspect, one part of the first time-frequency-space unit group is on a TDD frequency band, and the other part is on an FDD downlink frequency band. In this implementation, the downlink reference signal may be sent on different frequency bands.

In a possible implementation of the third aspect or the fourth aspect, the K time-frequency-space units are on the TDD frequency band, and the channel state information includes at least one of the following: channel state information of the TDD frequency band or channel state information of the FDD downlink frequency band. In this implementation, when the uplink reference signal is sent on the TDD frequency band, a part of the downlink reference signal is sent on the TDD frequency band, and the other part is sent on the FDD frequency band. Because of partial reciprocity of FDD, downlink channel state information of the FDD frequency band or uplink channel state information of the TDD frequency band and downlink channel state information of the TDD frequency band may be determined.

According to a fifth aspect, a channel state information determining system is provided. The system includes a network device and a terminal device. The network device is configured to perform the method according to any one of the first aspect or the possible implementations of the first aspect, and terminal device is configured to perform the method according to any one of the second aspect or the possible implementations of the second aspect.

According to a sixth aspect, a communication apparatus is provided. The communication apparatus includes at least one processor and a memory, the processor is coupled to the memory, and the memory stores program instructions. When the program instructions stored in the memory are executed by the processor, the method in any one of the first aspect or the possible implementations of the first aspect is performed, or the method in any one of the second aspect or the possible implementations of the second aspect is performed.

According to a seventh aspect, a communication apparatus is provided. The communication apparatus includes at least one processor and an interface circuit. The at least one processor is configured to perform the method in any one of the first aspect or the possible implementations of the first aspect, or the method in any one of the second aspect or the possible implementations of the second aspect.

According to an eighth aspect, a network device is provided. The network device includes the communication apparatus provided in the third aspect, or the network device includes the communication apparatus provided in the sixth aspect, or the network device includes the communication apparatus provided in the seventh aspect.

According to a ninth aspect, a terminal device is provided. The terminal device includes the communication apparatus provided in the fourth aspect, the terminal device includes the communication apparatus provided in the sixth aspect, or the terminal device includes the communication apparatus provided in the seventh aspect.

According to a tenth aspect, a computer program product is provided. The computer program product includes a computer program. When the computer program is executed by a processor, the computer program is used to perform the method in any one of the first aspect or the possible implementations of the first aspect, or the method in any one of the second aspect or the possible implementations of the second aspect.

According to an eleventh aspect, a computer-readable storage medium is provided. The computer-readable storage medium stores a computer program. When the computer program is executed, the computer program is used to perform the method in any one of the first aspect or the possible implementations of the first aspect, or the method in any one of the second aspect or the possible implementations of the second aspect.

According to a twelfth aspect, a chip is provided. The chip includes a processor, configured to invoke a computer program from a memory and run the computer program, to enable a communication device in which the chip is installed to perform the method in any one of the first aspect or the possible implementations of the first aspect, or the method in any one of the second aspect or the possible implementations of the second aspect.

## BRIEF DESCRIPTION OF DRAWINGS

FIG. 1 is a schematic flowchart of estimating CSI of a downlink channel by a network device and a terminal device by using an uplink SRS according to an embodiment of this application;
FIG. 2 is a schematic flowchart of CSI measurement performed by a network device and a terminal device according to an embodiment of this application;
FIG. 3 is a diagram of a communication system 100 applicable to an embodiment of this application;

FIG. 4 is a diagram of structures of a network device 20 and a terminal device 30 according to an embodiment of this application;

FIG. 5 is a diagram of another structure of a network device 20 and a terminal device 30 according to an embodiment of this application;

FIG. 6 is an interaction diagram of a method for determining channel state information 600 according to an embodiment of this application;

FIG. 7 is a diagram of a time-frequency-space unit group according to an embodiment of this application;

FIG. 8 is a diagram of a time-frequency-space unit group according to an embodiment of this application;

FIG. 9 is a block diagram of a communication apparatus 900 according to an embodiment of this application;

FIG. 10 is a block diagram of another communication apparatus 1000 according to an embodiment of this application;

FIG. 11 is a block diagram of a communication apparatus 1100 according to an embodiment of this application;

FIG. 12 is a block diagram of another communication apparatus 1200 according to an embodiment of this application;

FIG. 13 is a diagram of a structure of a terminal device 1300 according to an embodiment of this application;

FIG. 14 is a diagram of a structure of a network device 1400 according to an embodiment of this application; and

FIG. 15 is a diagram of a chip system according to an embodiment of this application.

## DESCRIPTION OF EMBODIMENTS

For ease of understanding embodiments of this application, the following first briefly describes several terms used in this application.

### 1. Precoding technology

When a channel state is known, a sending device (for example, a network device) may process a to-be-sent signal based on a precoding matrix that matches the channel state, so that a precoded to-be-sent signal adapts to a channel, and a receiving device (for example, a terminal device) eliminates inter-channel impact with less complexity. Therefore, after the to-be-sent signal is precoded, received signal quality (for example, a signal to interference plus noise ratio (signal to interference plus noise ratio, SINR)) is improved. Transmission between a sending device and a plurality of receiving devices can be performed on a same time-frequency resource by using the precoding technology. In other words, multi-user multiple-input multiple-output (multiple user multiple input multiple output, MU-MIMO) is implemented.

It should be understood that related descriptions of the precoding technology in this specification are merely examples for ease of understanding, and are not intended to limit the protection scope of embodiments of this application. In a specific implementation process, the sending device mainly determines the precoding matrix based on CSI of a downlink channel, to precode data. In addition, a radio access network device may further precode data in another manner. For example, when the CSI cannot be known, the radio access network device precodes the data by using a preset precoding matrix or in a weighted processing manner. For brevity, specific content thereof is not described in this specification.

### 2. Channel reciprocity

In a time division duplex (time division duplexing, TDD) mode, on uplink and downlink channels, signals are transmitted on a same frequency domain resource and different time domain resources. In a short period of time (for example, coherence time of channel propagation), it may be considered that the signals on the uplink and downlink channels encounter same channel fading. This is reciprocity between the uplink and downlink channels. Based on the reciprocity between the uplink and downlink channels, a network device may measure the uplink channel based on an uplink reference signal such as a sounding reference signal (sounding reference signal, SRS), and may estimate the downlink channel based on the uplink channel, to determine a precoding matrix for downlink transmission.

Uplink and downlink channels in a frequency division duplex (frequency division duplexing, FDD) mode have partial reciprocity, for example, angle reciprocity and delay reciprocity. In other words, delays and angles on the uplink and downlink channels in the FDD mode have reciprocity. Therefore, an angle and a delay may also be referred to as reciprocity parameters.

When a signal is transmitted on a radio channel, the signal may arrive at a receive antenna through a plurality of paths from a transmit antenna. Frequency selective fading caused by a multi-path delay is a change of a frequency domain channel. The delay is an amount of transmission time of a radio signal on different transmission paths, is determined by a distance and a speed, and is irrelevant to frequency domain of the radio signal. When a signal is transmitted on different transmission paths, there are different transmission delays due to different distances. Therefore, the delays on the uplink and downlink channels in the FDD mode may be considered to be the same, in other words, reciprocal.

In addition, the angle may be an angle of arrival (angle of arrival, AOA) at which the signal arrives at the receive antenna through a radio channel, or may be an angle of departure (angle of departure, AOD) at which the signal is transmitted through the transmit antenna. In embodiments of this application, the angle may be an angle of arrival at which an uplink signal arrives at the network device, or may be an angle of departure at which the network device transmits a downlink signal. The angle of arrival of the uplink reference signal and the angle of departure of the downlink reference signal may be considered to be the same, in other words, reciprocal. Therefore, in the FDD mode, the uplink and downlink channels have reciprocity in terms of an angle.

3. Channel state information (CSI)

The CSI is information used to describe channel attributes of a communication link in a wireless communication system. The CSI may include but is not limited to a precoding matrix, a precoding matrix indicator (precoding matrix indicator, PMI), a rank indicator (rank indicator, RI), a channel quality indicator (channel quality indicator, CQI), a layer indicator (layer indicator, LI), and the like.

The PMI is mainly used in this application. It should be noted that after a terminal device reports a PMI to a network device, the radio access network device needs to determine a finally used precoding matrix based on the PMI and another factor.

4. PMI

The PMI may be used to indicate a precoding matrix. The precoding matrix may be a precoding matrix determined by a terminal device based on a channel matrix of frequency domain units. The PMI may also be referred to as a codebook.

5. Reference signal

The reference signal (reference signal, RS) may also be referred to as a pilot (pilot), a reference sequence, or the like. In embodiments of this application, the reference signal may be a reference signal for channel measurement. For example, the reference signal may be a channel state information reference signal (channel state information reference signal, CSI-RS) used for downlink channel measurement, or may be a sounding reference signal (sounding reference signal, SRS) used for uplink channel measurement. It should be understood that the foregoing listed reference signals are merely examples, and should not constitute any limitation on this application. This application does not exclude a possibility of defining another reference signal in a future protocol to implement a same or similar function.

A precoded reference signal may be a reference signal obtained by precoding a reference signal. Precoding may specifically include beamforming (beamforming) and/or phase rotation. The beamforming may be implemented by precoding a downlink reference signal based on one or more angle vectors, and the angle vector may be a DFT vector. The phase rotation may be implemented by precoding a downlink reference signal based on one or more delay vectors, and the delay vector may be a DFT vector.

6. Port (port)

The antenna port may be understood as a virtual antenna identified by the receiving device. In embodiments of this application, the port may be a transmit port of a reference signal, a transmit antenna port, and a receive antenna port. For example, a reference signal of each port may be a reference signal that is not precoded, or may be a precoded reference signal obtained by precoding a reference signal based on at least one delay vector. The port may alternatively be a port of a beamformed reference signal. For example, a reference signal corresponding to each port may be a precoded reference signal obtained by precoding a reference signal based on at least one angle vector, or may be a precoded reference signal obtained by precoding a reference signal based on at least one angle vector and at least one delay vector. The signal of each port may be transmitted by using one or more resource blocks (resource blocks, RBs).

The transmit antenna port may be an actual independent sending unit (transceiver unit, TxRU), or may be a virtual sending unit formed by combining a plurality of actual independent sending units. The receive antenna port may be an actual independent receiving unit (receiving unit), or may be a virtual receiving unit formed by combining a plurality of actual independent receiving units. It can be understood that, if space domain precoding is performed on a reference signal, a quantity of ports may be a quantity of reference signal ports, and the quantity of reference signal ports may be less than a quantity of transmit antenna ports.

In embodiments shown below, when a transmit antenna port is described, the transmit antenna port may be an actual independent sending unit or a virtual sending unit. When a receive antenna port is described, the receive antenna port may be an actual independent receiving unit or a virtual receiving unit. When a port is described, in different embodiments, the port may be a transmit antenna port, or may be a receive antenna port, or may be a reference signal port. A specific meaning expressed by the port may be determined according to a specific embodiment.

7. Space domain unit

The space domain unit may also be referred to as an antenna unit or an antenna port, and may represent a space domain feature of a channel. In the following embodiments, when a space domain unit is described, the space domain unit may be a transmit antenna port, a receive antenna port, or a reference channel port, or may be a combination of a transmit antenna port and a receive antenna port or a combination of a reference signal port and a receive antenna port. A specific meaning expressed by the space domain unit may be determined according to a specific embodiment. In this application, a position of a space domain unit is an index corresponding to an antenna port.

8. Frequency domain unit

The frequency domain unit may also be referred to as a frequency unit, represents a unit of a frequency domain resource, and may represent different frequency domain resource granularities. The frequency domain unit may include, for example, but is not limited to, one or more subbands (subband, SB), one or more resource blocks (RB), one or more resource block groups (resource block group, RBG), and one or more precoding resource block groups (precoding resource block group, PRG). In the following embodiments, all related descriptions related to the frequency domain unit are described by using a subband. It should be understood that the subband is merely a case of the frequency domain unit, and should not constitute any limitation on this application. In this application, a position of the frequency domain unit is a frequency domain resource corresponding to the frequency domain unit.

9. Time domain unit

The time domain unit may also be referred to as a time unit, represents a unit of a time domain resource, and may represent different time domain resource granularities. The time domain unit may include, for example, but is not limited to, one or more OFDM symbols (symbol), one or more slots (slot), one or more subframes (subframe), or one or more frames (frame). In the following embodiments, all related descriptions related to the time domain unit are described by using an OFDM symbol. It should be understood that the OFDM symbol is merely a case of a time domain unit, and should not constitute any limitation on this application. In this application, a position of the time domain unit is a time domain resource corresponding to the time domain unit.

10. Time-frequency-space unit

The time-frequency-space unit may also be referred to as a space-time-frequency unit, a space-frequency-time unit, a time-space-frequency unit, a frequency-space-time unit, or a frequency-time-space unit, and includes a space domain unit, a frequency domain unit, and a time domain unit. The time-frequency-space unit may represent a channel feature of a corresponding port in a frequency domain unit and a time domain unit. A position of a time-frequency-space unit is represented by a position of a space domain unit, a frequency domain unit, and a time domain unit that correspond to the time-frequency-space unit. A time-frequency-space unit group is a combination of one or more time-frequency-space units.

The following describes technical solutions of this application with reference to accompanying drawings.

A 5G communication system has higher requirements on aspects such as system capacity and spectrum efficiency. In the 5G communication system, application of a massive multiple input multiple output (Massive MIMO) technology plays a critical role in improving the spectrum efficiency of the system. When the MIMO technology is used, a base station needs to precode data before sending the data to UE. How to perform precoding depends on channel state information (CSI) fed back by a user to the base station. Therefore, accurate CSI information is an important factor that affects system performance.

In a TDD system, because an uplink channel and a downlink channel use a same bandwidth, the uplink and downlink channels have reciprocity. Information having reciprocity includes delay information and angle information. Therefore, a network device side may obtain CSI of a downlink channel by using an uplink SRS channel based on reciprocity of the uplink and downlink channels, to perform signal precoding.

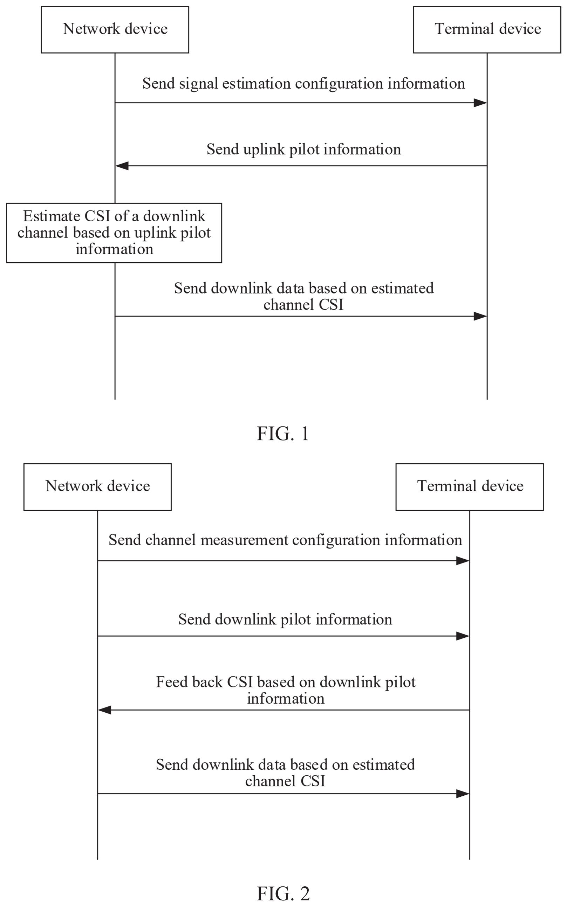

For example, FIG. 1 is a schematic flowchart of estimating CSI of a downlink channel by a network device and a terminal device by using an uplink SRS according to an embodiment of this application. As shown in FIG. 1, the network device first sends signal estimation configuration information to the terminal device. The configuration information is used for channel estimation configuration, to notify the terminal device of time and a behavior of sending SRS pilot measurement. The terminal device sends, based on the signaling sent by the network device, a pilot to the network device for SRS channel estimation. The network device performs measurement based on the pilot sent by the terminal device, and then performs SRS uplink channel estimation based on the pilot. Based on reciprocity between an uplink channel and a downlink channel, the network device may send downlink data to the terminal device based on CSI of the uplink channel.

In an FDD system, uplink and downlink channels have partial reciprocity. Therefore, the network device may not use uplink and downlink channel reciprocity, but send a downlink reference signal to the terminal device, and obtain CSI of a downlink channel by using feedback from the terminal device.

For example, FIG. 2 is a schematic flowchart of CSI measurement performed by a network device and a terminal device according to an embodiment of this application. As shown in FIG. 2, the network device sends signaling to the terminal device. The signaling is information used for channel measurement configuration, to notify the terminal device of time and a behavior of sending SRS pilot measurement. Then, the network device sends a pilot to the terminal device for channel measurement. The terminal device performs measurement based on the pilot sent by the network device, to obtain a final CSI feedback amount through calculation. The terminal device feeds back CSI to the network device, and finally, the network device sends data based on the CSI fed back by the terminal device. The network device determines, based on PMI fed back by the terminal device, precoding used for transmitting the data to the terminal device.

In conclusion, the network device may obtain downlink CSI by sending the uplink pilot (that is, SRS estimation) to the terminal device, or may determine the downlink CSI based on the CSI fed back by the terminal device.

Generally, for a terminal device whose SRS signal-to-noise ratio is greater than a threshold, the network device may obtain downlink CSI by using SRS channel estimation, and determine downlink precoding. However, SRS channel estimation has low precision, and channel information estimation is inaccurate. Therefore, for a terminal device whose signal-to-noise ratio is less than the threshold, the network device may determine downlink CSI by using CSI fed back by the terminal device, and determine downlink precoding.

However, obtaining the downlink CSI by uplink pilot measurement needs to occupy a large quantity of time-frequency resources, and obtaining the downlink CSI by using the CSI fed back by the terminal device has a high requirement on calculation complexity of the terminal device.

Therefore, how to resolve a problem that obtaining CSI by pilot measurement alone needs to occupy a large quantity of time-frequency resources, and a problem that obtaining highprecision real-time CSI by using CSI fed back by UE alone requires high calculation complexity of the terminal device are urgent problems that need to be resolved currently.

In view of this, this application provides a method for determining channel state information. The method includes: A network device indicates, to a terminal device, a resource on which a downlink reference signal is to be sent, and the network device indicates, to the terminal device, a resource on which the terminal device is to send an uplink reference signal. Then, the network device determines CSI of a downlink channel based on the uplink reference signal sent by the terminal device and channel statistics information fed back by the terminal device. According to the method provided in this application, the terminal device sends the uplink reference signal based on the indication of the network device, and therefore a large quantity of time-frequency resources do not need to be occupied. In addition, the network device performs calculation based on the uplink reference signal and the channel statistics information, and therefore, the terminal device is not required to have high calculation complexity.

A communication system provided in embodiments of this application is specifically described below.

The technical solutions in embodiments of this application may be applied to various communication system, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system. For ease of description, in embodiments of this application, an example in which the provided method is applied to the 5G system or the NR system is used to describe the method provided in embodiments of this application. When the method provided in embodiments of this application is applied to another system, a network element in embodiments of this application is replaced with a network element that has a same or similar function in a corresponding system for understanding.

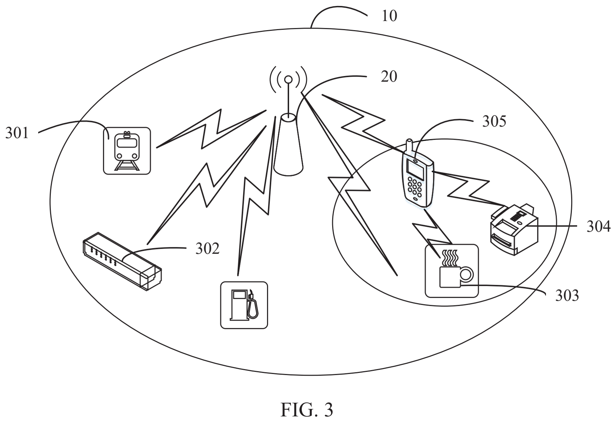

Network elements in this application include a network device and a terminal device, and uplink and downlink communication may be performed between the network device and the terminal device. For example, FIG. 3 is a diagram of a communication system 10 applicable to an embodiment of this application. As shown in FIG. 3, the communication system 10 includes at least one network device 20 and at least one terminal device 30 (including terminal devices 301 to 305). In the communication system 10, one or more of the terminal devices 30 may send an uplink signal to the network device, and the network device may also send a downlink signal to one or more of the terminal devices 30. In addition, some terminal devices (for example, the terminal device 303 to the terminal device 305) may also form another communication system. In the communication system, sidelink communication may be performed between terminal devices. For example, the terminal device 303 may send sidelink information to the terminal device 304 and the terminal device 305.

The terminal device in embodiments of this application may also be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

The network device in embodiments of this application may be a device for communicating with the terminal device. The network device may be a base transceiver station (base transceiver station, BTS) in a global system for mobile communications (global system for mobile communications, GSM) or code division multiple access (code division multiple access, CDMA), or may be a NodeB (NodeB, NB) in a wideband code division multiple access (wideband code division multiple access, WCDMA) system, or may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a future 5G network, a network device in a future evolved PLMN network, or the like. This is not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and an internal memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In some embodiments, the network device 20 and the terminal device 30 may also be referred to as communication apparatuses, and each may be a general-purpose device or a specialpurpose device. This is not specifically limited in embodiments of this application.

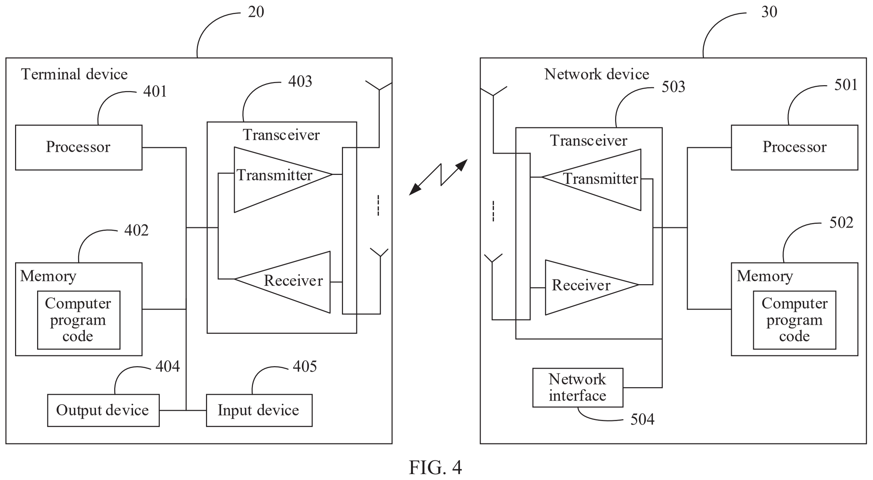

FIG. 4 is a diagram of structures of a terminal device 20 and a network device 30 according to an embodiment of this application.

The terminal device 20 includes at least one processor (an example in which one processor 401 is included is used for description in FIG. 4) and at least one transceiver (an example in which one transceiver 403 is included is used for description in FIG. 4). Optionally, the terminal device 20 may further include at least one memory (an example in which one memory 402 is included is used for description in FIG. 4), at least one output device (an example in which one output device 404 is included is used for description in FIG. 4), and at least one input device (an example in which one input device 405 is included is used for description in FIG. 4).

The processor 401, the memory 402, and the transceiver 403 are connected via a communication line. The communication line may include a path for transmission of information between the foregoing components.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application. During specific implementation, in an embodiment, the processor 401 may alternatively include a plurality of CPUs, and the processor 401 may be a single-core (single-CPU) processor or a multi-core (multi-CPU) processor. The processor herein may be one or more devices, circuits, or processing cores configured to process data (for example, computer program instructions).

The memory 402 may be an apparatus having a storage function. For example, the memory 402 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, or the like), a magnetic disk storage medium or another magnetic storage device, or any other medium that can be used for carrying or storing expected program code in a form of instructions or a data structure and that is accessible by a computer, but is not limited thereto. The memory 402 may exist independently, and is connected to the processor 301 through the communication line. Alternatively, the memory 402 may be integrated with the processor 401.

The memory 402 is configured to store computer-executable instructions for performing the solution of this application, and the processor 401 controls execution. Specifically, the processor 401 is configured to execute the computer-executable instructions stored in the memory 402, to implement a method in embodiments of this application.

Alternatively, in this application, the processor 401 may perform a processing-related function in the signal sending and receiving method provided in this application, and the transceiver 403 is responsible for communicating with another device or a communication network. This is not specifically limited in embodiments of this application.

The computer-executable instructions in this application may also be referred to as application program code or computer program code. This is not specifically limited in embodiments of this application.

The transceiver 403 may use any apparatus such as a transceiver, and is configured to communicate with another device or a communication network such as the Ethernet, a radio access network (radio access network, RAN), or a wireless local area network (wireless local area network, WLAN). The transceiver 403 includes a transmitter (transmitter, Tx) and a receiver (receiver, Rx).

The output device 404 communicates with the processor 401, and may display information in a plurality of manners. For example, the output device 404 may be a liquid crystal display (liquid crystal display, LCD), a light emitting diode (light emitting diode, LED) display device, a cathode ray tube (cathode ray tube, CRT) display device, or a projector (projector).

The input device 405 communicates with the processor 401, and may accept a user input in a plurality of manners. For example, the input device 305 may be a mouse, a keyboard, a touchscreen device, or a sensing device.

The network device 30 includes at least one processor (an example in which one processor 501 is included is used for description in FIG. 4) and at least one transceiver (an example in which one transceiver 503 is included is used for description in FIG. 4). Further, the network device 30 may further include at least one memory (an example in which one memory 502 is included is used for description in FIG. 4) and at least one network interface (an example in which one network interface 504 is included is used for description in FIG. 4). The processor 501, the memory 502, the transceiver 503, and the network interface 504 are connected via the communication line. The network interface 504 is configured to connect to a core network device through a link, or connect to a network interface of another network device through a wired or wireless link (not shown in FIG. 4). This is not specifically limited in embodiments of this application. In addition, for related descriptions of the processor 501, the memory 502, and the transceiver 53, refer to descriptions of the processor 401, the memory 402, and the transceiver 403 in the terminal device 20. Details are not described herein again.

It may be understood that the structures shown in FIG. 4 do not constitute a specific limitation on the terminal device 20 and the network device 30. For example, in some other embodiments of this application, the terminal device 20 and the network device 30 each may include more or fewer components than those shown in the figure, some components may be combined, some components may be split, or the components may be differently arranged. The components shown in the figure may be implemented by hardware, software, or a combination of software and hardware.

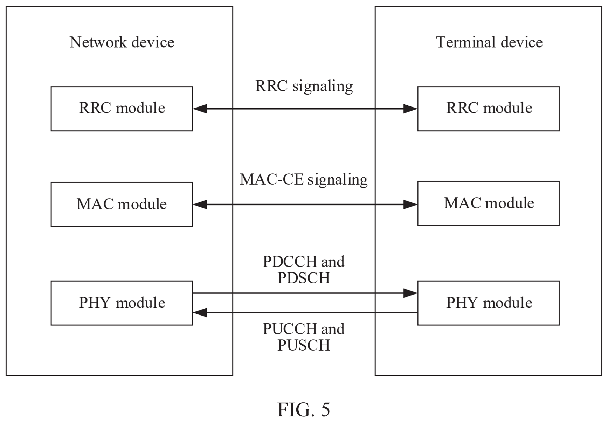

In addition, FIG. 5 is a diagram of another structure of the network device 30 and the terminal device 20 according to an embodiment of this application. Refer to FIG. 5. The network device 30 and the terminal device 20 may include a radio resource control (radio resource control, RRC) module, a media access control (media access control, MAC) module, and a physical (physical, PHY) module.

The RRC module is configured to receive and send RRC signaling. The MAC module is configured to receive and send media access control-control element (media access control-control element, MAC-CE) signaling. The PHY module is configured to receive and send uplink and downlink control signaling, for example, a physical downlink control channel (physical downlink control channel, PDCCH) and a physical uplink control channel (physical uplink control channel, PUCCH), and is further configured to receive and send uplink and downlink data, for example, a physical downlink shared channel (physical downlink shared channel, PDSCH) and a physical uplink shared channel (physical uplink share channel, PUSCH).

With reference to the accompanying drawings, the following describes in detail the method for determining channel state information provided in embodiments of this application by using an example in which the network device 30 shown in FIG. 4 interacts with any terminal device 20.

It should be noted that a name of a message (or information), a name of a parameter in the message (or information), or the like in the following embodiments of this application is only an example, and may be another name during specific implementation. This is not specifically limited in embodiments of this application.

It may be understood that, in embodiments of this application, a terminal device and/or a network device may perform some or all of steps in embodiments of this application. The steps are merely examples. In embodiments of this application, other steps or variations of various steps may be further performed. In addition, the steps may be performed in a sequence different from a sequence presented in embodiments of this application, and not all the steps in embodiments of this application may be necessarily performed.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

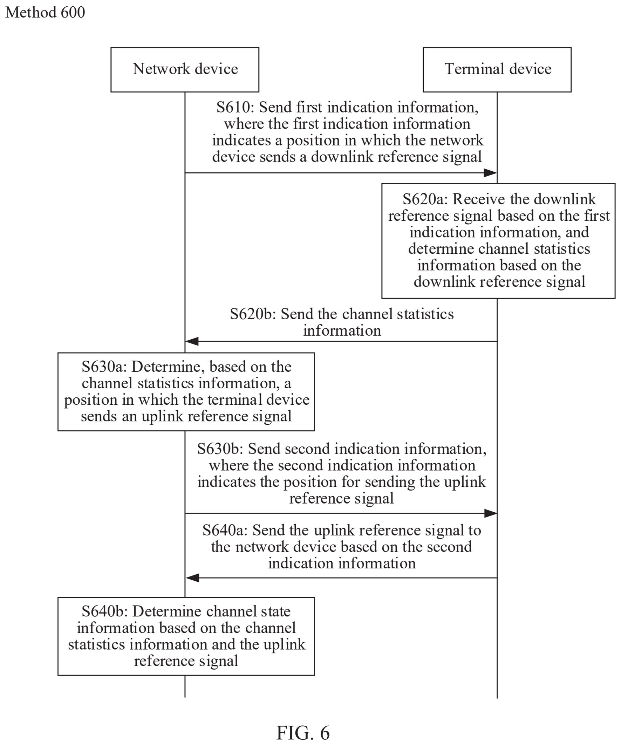

The following describes in detail a method for determining channel state information provided in this application with reference to FIG. 6. FIG. 6 is an interaction diagram of an example of a method 600 for determining channel state information according to an embodiment of this application. The method 600 may be applied to the foregoing scenario, and certainly may be applied to another communication scenario. This is not limited in this embodiment of this application.

It should be understood that in this embodiment of this application, the method 600 is described by using an example in which a terminal device and a network device perform the steps in the method 600. By way of example, but not limitation, the steps of the method 600 may be alternatively performed by a chip used in the terminal device and a chip used in the network device.

As shown in FIG. 6, the method 600 includes the following steps.

S610: The network device sends first indication information to the terminal device, where the first indication information indicates a position in which the network device sends a downlink reference signal.

In this embodiment of this application, the network device indicates, to the terminal device, the position for sending the downlink reference signal, and the terminal device may receive the downlink reference signal sent in the position, so that the terminal device can determine channel statistics information based on the received reference signal.

It should be understood that a time-frequency-space unit is used to represent change rules of a channel in three dimensions: time domain, frequency domain, and space domain. One time-frequency-space unit represents that one transmit port sends a signal to one receive port on one time domain unit and one frequency domain unit. One time-frequency-space unit group is a combination of a plurality of time-frequency-space units, and represents that a plurality of antenna ports send signals on a plurality of time domain units and a plurality of frequency domain units.

Therefore, in this embodiment of this application, the network device may indicate, to the terminal device in the time domain dimension, the frequency domain dimension, and the space domain dimension, the position for sending the downlink reference signal.

In some embodiments, the first indication information includes indication information of at least one time-frequency-space unit group. Indication information of each time-frequency-space unit group indicates time domain positions, frequency domain positions, and space domain positions of all time-frequency-space units in the time-frequency-space unit group.

In a possible implementation, the indication information of each time-frequency-space unit group includes at least one of the following: indication information of $N_1$ space domain units, indication information of $N_2$ frequency domain units, and indication information of $N_3$ time domain units, where $N_1 \geq 1$, $N_1$ is an integer, $N_2 \geq 1$, $N_2$ is an integer, $N_3 \geq 1$, and $N_3$ is an integer.

In a possible implementation, the first indication information may include positions of the $N_1$ space domain units, positions of the $N_2$ frequency domain units, and positions of $N_3$ time domain units. It may be understood that $N_1$, $N_2$, and $N_3$ time-frequency-space units may be referred to as a time-frequency-space unit group. The terminal device receives the downlink reference signal sent on the at least one time-frequency-space unit group.

In some embodiments, the indication information of the $N_1$ space domain units may indicate a combination of a transmit port and a receive port corresponding to each space domain unit, or indicate a combination of a reference signal port and a receive port corresponding to each space domain unit; or the indication information of the $N_1$ space domain units may indicate only a transmit port corresponding to each space domain unit, or indicate a reference signal port corresponding to each space domain unit.

In a possible implementation, the positions of the $N_1$ space domain units may include positions of $M_1$ transmit ports or reference signal ports and positions of $M_2$ receive ports, where $M_1 \geq 1$, $M_1$ is an integer, $M_2 \geq 1$, $M_2$ is an integer, and $N_1 = M_1 M_2$. The $N_1$ space domain units are combinations of the $M_1$ transmit ports and the $M_2$ receive ports.

In a possible implementation, the positions of the $N_1$ space domain units may also include the positions of only the $M_1$ transmit ports or reference signal ports. The $N_1$ space domain units are combinations of the $M_1$ transmit ports or reference signal ports and all receive ports.

For example, the indication information of the $N_1$ space domain units may be positions of eight space domain units, and the network device may indicate four transmit ports and two receive ports to the terminal device. It is assumed that the terminal device has two receive ports in total, and the network device may indicate only four transmit ports to the terminal device. The network device may directly indicate positions of the four transmit ports to the terminal device. For example, the network device may directly indicate the four transmit ports to the terminal device. That is, the network device may explicitly indicate the four ports. For example, the four ports are respectively the 1st port, the 3rd port, the 5th port, and the 7th port.

For another example, the indication information of the $N_2$ frequency domain units may be positions of five frequency domain units. In this case, the network device may directly indicate the positions of the five frequency domain units to the terminal device. In other words, the network device may indicate positions of five SBs, five RBs, five RBGs, five PRGs, or the like to the terminal device. For example, the positions of the five RBs are respectively the 1st RB, the 3rd RB,

the 5th RB, the 7th RB, and the 9th RB.

For another example, the indication information of the $N_3$ time domain units may be positions of five time domain units. In this case, the network device may directly indicate the positions of the five time domain units to the terminal device. In other words, the network device may indicate positions of five OFDM symbols, five slots, or the like to the terminal device. For example, the positions of the five OFDM symbols are respectively the 1st OFDM symbol, the 3rd OFDM symbol, the 5th OFDM symbol, the 7th OFDM symbol, and the 9th OFDM symbol.

It may be understood that when the first indication information includes the positions of the $N_1$ space domain units, the positions of the $N_2$ frequency domain units, and the positions of the $N_3$ time domain units, the time-frequency-space unit group includes $N_1 \times N_2 \times N_3$ time-frequency-space units, and positions of the $N_1 \times N_2 \times N_3$ time-frequency-space units are determined by the positions of the $N_1$ space domain units, determined by the positions of the $N_2$ frequency domain units, and determined by the positions of the $N_3$ time domain units.

In a possible implementation, the positions of the $N_1$ space domain units, the positions of the $N_2$ frequency domain units, or the positions of the $N_3$ time domain units may also be predefined or preconfigured. For example, the first indication information may include only the positions of the $N_1$ space domain units and the positions of the $N_3$ time domain units, and the $N_2$ frequency domain units include all RBs in a full band, or the $N_2$ frequency domain units are predefined in a protocol. For another example, the first indication information may include only the positions of the $N_3$ time domain units, the $N_1$ space domain units include combinations of all reference ports and receive antenna ports, and the $N_2$ frequency domain units include all RBs in a full band.

In another possible implementation, the network device may alternatively indicate the position of the downlink reference signal implicitly. The first indication information may include: a start position of a frequency domain unit, a frequency domain unit offset, and a quantity of frequency domain units; or a start position of a time domain unit, a time domain unit offset, and a quantity of time domain units; or a start position of a space domain unit, a space domain unit offset, and a quantity of space domain units.

For example, the network device may alternatively indicate specific positions of the four ports implicitly. For example, the positions of the four ports start from the 1st port to the 7th port at intervals of two ports.

For another example, the network device may alternatively indicate specific positions of the five RBs implicitly. For example, the positions of the five RBs start from the 1st RB to the 9th RB at intervals of two RBs.

For another example, the network device may alternatively indicate specific positions of the five OFDM symbols implicitly. For example, the positions of the five OFDM symbols start from the 1st OFDM symbol to the 9th OFDM symbol at intervals of two OFDM symbols.

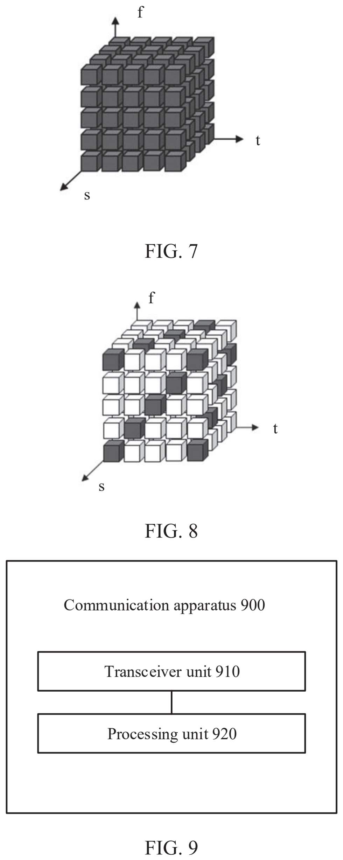

For example, FIG. 7 is a diagram of a time-frequency-space unit group according to an embodiment of this application. FIG. 7 shows a three-dimensional coordinate system and a position of a time-frequency-space unit in the time-frequency-space unit group in the three-dimensional coordinate system. f represents the frequency domain dimension, s represents the space domain dimension, and t represents the time domain dimension. Each block represents one time-frequency-space unit. As shown in FIG. 7, a time-frequency-space unit represented by a gray block is used by the terminal device to determine a position for receiving the downlink reference signal. To be specific, $N_1$ represents positions of four space domain units, $N_2$ represents positions of five frequency domain units, and $N_3$ represents positions of five time domain units. For ease of display, it is assumed in FIG. 7 that the network device has only one transmit port. In other words, the terminal device may receive downlink signals sent from the transmit port to four receive ports in positions of five frequency domain units and five time domain units.

It should be noted that the frequency domain unit and the time domain unit are not necessarily minimum time-frequency resource units. Therefore, a plurality of ports may send reference signals that are time-frequency orthogonal in a same frequency domain unit and a same time domain unit. For example, a port 1 and a port 2 may send reference signals that are time-frequency orthogonal on different REs of a same RB.

It should be noted that the foregoing descriptions are provided by using an example in which the network device indicates one time-frequency-space unit group. The network device may indicate a plurality of time-frequency-space unit groups to the terminal device. For a specific indication manner, refer to an indication manner of one time-frequency-space unit group. Details are not described herein again.

In some embodiments, frequency domain unit offsets corresponding to all of the plurality of time-frequency-space unit groups are the same. For example, frequency domain units corresponding to the first time-frequency-space unit group are the 1st, 3rd, and 4th RBs. That is, offsets of the 2nd frequency domain unit and the 3rd frequency domain unit relative to the 1st frequency domain unit are 2 RBs and 3 RBs respectively. In this case, frequency domain units corresponding to a second frequency domain unit group are the 2nd, 4th, and 5th RBs. That is, offsets of the 2nd frequency domain unit and the 3rd frequency domain unit relative to the 1st frequency domain unit are also 2 RBs and 3 RBs respectively.

It may be understood that different time-frequency-space unit groups have a same quantity of frequency domain units and a same frequency domain unit offset, but may have different frequency domain unit positions; different time-frequency-space unit groups have a same quantity of time domain units and a same time domain unit offset, but may have different time domain unit positions; and different time-frequency-space unit groups have a same quantity of space domain units, but may have different space domain unit positions.

Similarly, in some embodiments, time domain unit offsets corresponding to all of the plurality of time-frequency-space unit groups are the same.

In some embodiments, space domain units corresponding to all of the plurality of time-frequency-space unit groups are the same.

In some other embodiments, the first indication information includes indication information of at least two time-frequency-space unit groups. The indication information of the first time-frequency-space unit group includes at least one of the following: the indication information of the $N_1$ space domain units, the indication information of the $N_2$ frequency domain units, and the indication information of the $N_3$ time domain units, where $N_1 \geq 1$, $N_1$ is an integer, $N_2 \geq 1$, $N_2$ is an integer, $N_3 \geq 1$, and $N_3$ is an integer. Indication information of a second time-frequency-space unit group includes a frequency domain relationship and/or a time domain relationship between the second time-frequency-space unit group and the first time-frequency-space unit group.

For example, the indication information of the first time-frequency-space unit group indicates a transmit port 1 to send downlink signals to receive ports 1, 2, 3, and 4 on the $1^{st}$, $3^{rd}$, $5^{th}$, $7^{th}$, and $9^{th}$ RBs and the $1^{st}$, $3^{rd}$, $5^{th}$, $7^{th}$, and $9^{th}$ OFDM symbols of the $1^{st}$ slot. The indication information of the second time-frequency-space unit group indicates that a time domain unit position of the second time-frequency-space unit group is 10 slots after the time domain unit position of the first time-frequency-space unit group. That is, the transmit port 1 is indicated to send downlink signals to the receive ports 1, 2, 3, and 4 on the $1^{st}$, $3^{rd}$, $5^{th}$, $7^{th}$, and $9^{th}$ RBs and the $1^{st}$, $3^{rd}$, $5^{th}$, $7^{th}$, and $9^{th}$ OFDM symbols of the $11^{th}$ slot.

In some other embodiments, the frequency domain relationship and/or the time domain relationship between the second time-frequency-space unit group and the first time-frequency-space unit group may also be indicated by a reference time-frequency-space unit in the second time-frequency-space unit group and a reference time-frequency-space unit in the first time-frequency-space unit group.

In an implementation, the first indication information includes indication information of at least two time-frequency-space unit groups. The indication information of the first time-frequency-space unit group includes at least one of the following: the indication information of the $N_1$ space domain units, the indication information of the $N_2$ frequency domain units, and the indication information of the $N_3$ time domain units, where $N_1 \geq 1$, $N_1$ is an integer, $N_2 \geq 1$, $N_2$ is an integer, $N_3 \geq 1$, and $N_3$ is an integer. The indication information of the first time-frequency-space unit group includes indication information of the reference time-frequency-space unit in the first time-frequency-space unit group, and the indication information of the second time-frequency-space unit group includes indication information of the reference time-frequency-space unit in the second time-frequency-space unit group.

For example, the indication information of the first time-frequency-space unit group indicates the transmit port 1 to send downlink signals to the receive ports 1, 2, 3, and 4 on the $1^{st}$ $3^{rd}$, $5^{th}$, $7^{th}$, and $9^{th}$ RBs and the $1^{st}$, $3^{rd}$, $5^{th}$, $7^{th}$, and $9^{th}$ OFDM symbols of the $1^{st}$ slot. The reference time-frequency-space unit of the first time-frequency-space unit group indicates the transmit port 1 to send a downlink signal to the receive port 1 on the $1^{st}$ RB and the $1^{st}$ OFDM symbol of the $1^{st}$ slot. The reference time-frequency-space unit of the second time-frequency-space unit group indicates the transmit port 1 to send a downlink signal to the receive port 1 on the $1^{st}$ RB and the $1^{st}$ OFDM symbol of the $11^{th}$ slot. The second time-frequency-space unit group indicates the transmit port 1 to send downlink signals to the receive ports 1, 2, 3, and 4 on the $1^{st}$, $3^{rd}$, $5^{th}$, $7^{th}$, and $9^{th}$ RBs and the $1^{st}$, $3^{rd}$, $5^{th}$, $7^{th}$, and $9^{th}$ OFDM symbols of the $11^{th}$ slot.

In some other embodiments, the first indication information may also indicate the terminal device to feed back channel statistics information corresponding to the time-frequency-space unit group. In this case, the downlink reference signal may be sent on more time-frequency-space units including the time-frequency-space unit group.

S620a: The terminal device receives the downlink reference signal based on the first indication information, and determines the channel statistics information based on the downlink reference signal.

S620b: The terminal device sends the channel statistics information to the network device.

In this embodiment of this application, the terminal device receives, based on the indication of the network device, the downlink reference signal sent on one or more time-space-frequency subsets, and then the network device determines the channel statistics information based on the received downlink reference signal.

In some embodiments, the channel statistics information may be a channel covariance matrix and/or a channel eigenvector.

In another possible implementation, the channel statistics information may be channel eigenvectors of $N_1 \times N_2 \times N_3$ time-frequency-space units.

In a specific implementation, a channel corresponding to a time-frequency-space unit group is a time-frequency-space channel matrix or a time-frequency-space channel vector. It may be understood that the time-frequency-space channel matrix and the time-frequency-space channel vector may be converted to each other, and the time-frequency-space channel matrix and the time-frequency-space channel vector are equivalent. It should be noted that a quantity of time domain units in one time-frequency-space unit group may be 1, that is, $N_3=1$, and the time-frequency-space channel vector may be a space-frequency channel vector. Similarly, the time-frequency-space channel vector may also be a time-frequency channel vector, a time-space channel vector, a time domain channel vector, a space domain channel vector, or a frequency domain channel vector.

For example, in this embodiment of this application, the matrix shown in FIG. 7 is a position in which the terminal device receives the downlink reference signal. In this case, the terminal device may calculate a covariance matrix of the matrix and/or calculate an eigenvector of the matrix, and then send the covariance matrix of the matrix and/or the eigenvector of the matrix to the network device.

Optionally, in this embodiment of this application, the following formula may be used to calculate time-frequency-space channel vectors corresponding to one or more time-frequency-space unit groups, to obtain the channel statistics information:

$$E[H \times H'] = USU' \tag{1}$$

H represents a time-frequency-space channel vector corresponding to a time-frequency-space unit group, and a dimension is $N_1N_2N_3 \times 1$. H' represents a conjugate transposition of H, and a dimension is $1 \times N_1N_2N_3$. $H \times H'$ is a channel covariance matrix corresponding to the time-frequency-space unit group. $E[H \times H']$ represents averaging channel covariance matrices corresponding to the one or more time-frequency-space unit groups.

It should be noted that, for the terminal device, the channel H may be obtained based on the downlink reference signal. In this case, the terminal device may perform singular value decomposition calculation on $E[H \times H']$ based on the formula (1) to obtain an eigenvector U corresponding to the channel covariance matrix $E[H \times H']$. That is, the channel statistics information may be the channel covariance matrix $E[H \times H']$ and/or the channel eigenvector U.

S630a: The network device determines, based on the channel statistics information, a position in which the terminal device sends an uplink reference signal.

S630b: The network device sends second indication information to the terminal device, where the second indication information indicates the position for sending the uplink reference signal.

For example, the network device may determine, based on a quantity of channel eigenvectors U, a quantity of time-frequency-space units for sending the uplink reference channel. For example, if the quantity of channel eigenvectors is 8, the network device randomly selects K time-frequency-space units (K is an integer greater than or equal to 8) from a to-be-measured time-frequency-space unit group, to indicate the terminal device to send the uplink reference signal on the X time-frequency-space units. It should be noted that the time-frequency-space unit group is not necessarily one of the at least one time-frequency-space unit group indicated by the first indication information.

To resolve a problem that obtaining CSI through pilot measurement needs to occupy a large quantity of time-frequency resources, in this embodiment of this application, the network device may send the uplink reference signal in an uplink sparse pilot manner.

In some embodiments, the network device may indicate, based on the channel statistics information, the terminal device to send the uplink reference signal in the uplink sparse pilot manner.

In some embodiments, the second indication information includes indication information of the K space-time-frequency units in the to-be-measured time-frequency-space unit group.

In a possible implementation, the second indication information may include the indication information of the K space-time-frequency units.

For example, the second indication information may include positions of K space domain units, positions of K frequency domain units, and positions of K time domain units. The network device may directly indicate the terminal device to send the uplink reference signal in the positions of the K space domain units, the K frequency domain units, and the K time domain units. It should be noted that, in this possible implementation, the to-be-measured time-frequency-space unit group may not be indicated. It should be further noted that the K space domain units herein are K transmit ports or K reference signal ports of the terminal device.

For example, when K=2, the network device may indicate to the terminal device that positions of two ports are respectively the 1st port and the 3rd port, positions of two subbands are respectively the 1st subband and the 3rd subband, and positions of two symbols are respectively the 1st symbol and the 3rd symbol. In other words, the network device indicates the terminal device to send a reference signal of the 1st port on the 1st subband and the 1st symbol, and send a reference signal of the 3rd port on the 3rd subband and the 3rd symbol.

In another possible implementation, the second indication information may include number indexes of the K space domain units, number indexes of the K frequency domain units, and number indexes of the K time domain units. The network device may indirectly indicate the terminal device to send the uplink reference signal on the K space domain units, the K frequency domain units, and the K time domain units.

For example, when K is 2 and a total quantity of transmit ports of the terminal device is 4, a total of $C_4^2$ combinations formed by any two of the four ports may be numbered, and the network device may indicate number indexes of the two space domain units to the terminal device.

In a possible implementation, the second indication information may include indication information of relative positions of the K space-time-frequency units in the to-be-measured space-time-frequency unit group, and indication information of a position of the to-be-measured space-time-frequency unit group.

For example, the second indication information may include a first bitmap. A length of the first bitmap is a quantity of space-time-frequency units in the to-be-measured space-time-frequency unit group, the bitmap has a total of K first values, and the first value indicates that a corresponding space-time-frequency unit is one of the K space-time-frequency unit groups. The indication information of the position of the to-be-measured space-time-frequency unit group may be indicated in the same manner as the indication manner of the first time-frequency-frequency unit group, or the position of the to-be-measured space-time-frequency unit group may be indicated by using a reference space-time-frequency unit in the to-be-measured space-time-frequency unit group.

It should be noted that the first indication information and the second indication information may be carried in RRC signaling, MAC-CE signaling, or DCI, or may be carried in PDSCH signaling or PDCCH signaling. This is not limited in this embodiment of this application.

For example, FIG. 8 is a diagram of a time-frequency-space unit group according to an embodiment of this application. FIG. 8 shows a three-dimensional coordinate system and a position of a time-frequency-space unit in the time-frequency-space unit group in the three-dimensional coordinate system. f represents the frequency domain dimension, s represents the space domain dimension, and t represents the time domain dimension. Each block represents one time-frequency-space unit. As shown in FIG. 8, a time-frequency-space unit represented by a gray block is a position, indicated by the network device, in which the terminal device sends the uplink reference signal, that is, the positions of the K space-time-frequency units. For ease of display, in FIG. 8, it is assumed that the network device has only one receive port, and a receive port and a transmit port are consistent, and a receive port and a transmit port of the terminal device are also consistent. In other words, the terminal device may send the uplink reference signal in the positions of the K space-time-frequency units.

S640a: The terminal device sends the uplink reference signal to the network device based on the second indication information.

S640b: The network device determines channel state information based on the channel statistics information and the uplink reference signal.

In step S630b, the network device indicates, to the terminal device, the position for sending the uplink reference signal, and the terminal device sends the uplink reference signal to the network device based on the indication information.

The network device may determine the channel state information based on the statistics information that is fed back by the terminal device and that is received in step S620b and the uplink reference signal sent by the terminal device in step S630b.

In some embodiments, if the statistics information that is fed back by the terminal device and that is received by the network device in step S620b is a covariance matrix of one or more time-frequency-space unit groups, or an eigenvector of one or more time-frequency-space unit groups, and the terminal device sends the uplink reference signal on the K time-frequency-space units in the one or more time-frequency-space unit groups, the network device determines the channel state information of the one or more time-frequency-space unit groups based on the channel statistics information fed back by the terminal device and the uplink reference signal.

For example, a to-be-measured time-frequency-space channel vector H may be represented in the following formula:

$$H = U \times C \qquad (2)$$

H is a vector of $N_1 N_2 M_2$, $M_2$ is a quantity of antenna ports of the terminal device (for ease of description, it is assumed that the quantity of antenna ports of the network device is 1), U is a matrix of $N_1 N_2 M_2 \times M$, and C is a vector of $M * 1$ and is a weighting coefficient of a channel eigenvector. It should be understood that M in the foregoing formula is determined based on U.

The network device may determine K elements, namely, Hs, in the to-be-measured time-frequency-space channel vector H by using reference signals in the K time-frequency-space units. The network device may further determine a matrix Us based on K rows corresponding to Hs in U.

In a possible implementation, the weighting coefficient C may be determined according to the following formula:

$$C = U_s^{\dagger} H_s \qquad (3)$$

Hs is K rows in H, Us is K rows in U, $U_s^{\dagger}$ is a pseudo-inverse of a matrix $U_s$, and $K \geq M$ is required.

The to-be-measured time-frequency-space channel vector H may be determined based on the channel statistics information U, the uplink reference signal Hs, the formula (2), and the formula (3). That is, CSI of a corresponding downlink channel is determined.

In some embodiments, some time-frequency-space units in the first time-frequency-space unit group indicated by the first indication information may be on a TDD frequency band, and the other time-frequency-space units may be on an FDD downlink frequency band. That is, the network device sends the downlink reference signal on the TDD frequency band and the FDD frequency band, and the terminal device reports the channel statistics information jointly formed from a channel of the TDD frequency band and a channel of the FDD downlink frequency band. The K time-frequency-space units indicated by the second indication information may be on a TDD frequency band, that is, the network device indicates the terminal device to send the uplink reference signal on the TDD frequency band. In this embodiment, the network device may determine at least one of channel state information of the FDD downlink frequency band and channel state information of the TDD frequency band based on the channel statistics information formed from the channel of the TDD frequency band and the channel of the FDD downlink frequency band and the uplink reference signal sent on the TDD frequency band.

In conclusion, according to the method for determining channel state information provided in this embodiment of this application, the terminal device may receive, based on the indication of the network device, the downlink reference signal sent by the network device, determine multipath statistic information by obtaining a downlink pilot sent by the network device, and determine a channel average matrix based on the multipath statistic information. Then, the network device indicates, based on the channel average matrix, the terminal device to send an uplink sparse pilot. Finally, the network device determines channel state information based on a channel average value and uplink pilot information. According to the method provided in this application, with reference to pilot measurement performed by the network device and the channel statistics information fed back by the terminal device, a problem in a related technology that obtaining the channel state information through pilot measurement alone occupies a large quantity of time-frequency resources is resolved, and a problem that calculation complexity of the terminal device is high because the terminal device feeds back the channel state information alone is resolved.

It should be understood that, in the foregoing embodiment, how to obtain the downlink channel state information is specifically described by using an example in which the network device indicates the position in which the terminal device receives the downlink reference signal, the terminal device may feed back the channel information to the network device, the network device indicates the position in which the terminal device sends the uplink reference signal, and the network device measures the uplink reference signal. This embodiment of this application is further applicable to the scenario in which the terminal device indicates a position in which the network device receives an uplink reference signal, the network device may feed back channel information to the terminal device, the terminal device indicates a position in which the network device sends a downlink reference signal, and the terminal device measures a downlink reference signal, to obtain uplink channel state information. For specific steps, refer to the foregoing descriptions. Details are not described herein again.

It should be understood that division into manners, cases, categories, and embodiments in embodiments of this application is merely intended for ease of description, and shall not constitute a particular limitation. Features in the manners, categories, cases, and embodiments may be combined without contradiction.

It should be further understood that, the foregoing descriptions are merely intended to help a person skilled in the art better understand embodiments of this application, instead of limiting the scope of embodiments of this application. It is clear that a person skilled in the art may make various equivalent modifications or changes based on the foregoing examples. For example, some steps in the foregoing method 600 may be unnecessary, or some steps may be newly added. Alternatively, any two or more of the foregoing embodiments are combined. A modified, changed, or combined solution also falls within the scope of embodiments of this application.

It should be further understood that the foregoing descriptions of embodiments of this application emphasize differences between the embodiments. For same or similar parts that are not mentioned, refer to the embodiments. For brevity, details are not described herein again.

It should be further understood that sequence numbers of the foregoing processes do not mean a sequence of performing the processes. The sequence of performing the processes should be determined based on functions and internal logic of the processes, and should not be construed as any limitation on implementation processes of embodiments of this application.

It should be further understood that, in embodiments of this application, "presetting" and "predefining" may be implemented by prestoring corresponding code or a corresponding table on a device (for example, including the terminal device and the network device), or in another manner that may indicate related information. A specific implementation thereof is not limited in this application.

It should be further understood that in embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

The following describes a communication apparatus according to this application.

For example, FIG. 9 is a block diagram of a communication apparatus 900 according to an embodiment of this application. The communication apparatus 900 may correspond to the network device described in the method 600, or may be used in a chip or a component used in the network device. In addition, modules or units in the communication apparatus 900 are separately configured to perform actions or processing processes performed by the network device described in the method 600.

As shown in FIG. 9, the communication apparatus 900 includes a transceiver unit 910 and a processing unit 920. The transceiver unit 910 is configured to specifically send or receive a signal under driving of the processing unit 920.

In some embodiments:

the transceiver unit 910 is configured to send first indication information, where the first indication information indicates a position for sending a downlink reference signal;

the transceiver unit 910 is further configured to receive channel statistics information, where the channel statistics information is determined based on the downlink reference signal;

the transceiver unit 910 is further configured to send second indication information, where the second indication information indicates a position for sending an uplink reference signal; and

the transceiver unit 910 is further configured to receive the uplink reference signal, and determine channel state information based on the uplink reference signal and the channel statistics information.

The communication apparatus provided in this application may indicate, to a terminal device, the position for sending the downlink reference signal, so that the terminal device can determine the channel statistics information based on the received downlink reference signal, and the network device may further indicate, to the terminal device, the position for sending the uplink reference signal. The terminal device sends the uplink reference signal based on the indication of the network device, and therefore, does not need to occupy a large quantity of time-frequency resources. Finally, the network device determines the channel state information based on the received uplink reference signal and the channel statistics information. Therefore, a calculation complexity requirement for the terminal device is not high.

Optionally, in the apparatus 900, the first indication information includes indication information of at least one time-frequency-space unit group, indication information of a first time-frequency-space unit group includes at least one of the following: indication information of $N_1$ space domain units, indication information of $N_2$ frequency domain units, and indication information of $N_3$ time domain units, and the first time-frequency-space unit group is any one of the at least one time-frequency-space unit group, where $N_1 \geq 1$, $N_1$ is an integer, $N_2 \geq 1$, $N_2$ is an integer, $N_3 \geq 1$, and $N_3$ is an integer. In this implementation, the network device may send indication information of a time-frequency-space unit group to the terminal device, so that the terminal device can determine the position in which the network device sends the downlink reference signal.

Optionally, the indication information of the $N_1$ space domain units may indicate a combination of a transmit port and a receive port corresponding to each space domain unit, or indicate a combination of a reference signal port and a receive port corresponding to each space domain unit; or the indication information of the $N_1$ space domain units may indicate only a transmit port corresponding to each space domain unit, or indicate a reference signal port corresponding to each space domain unit.

Optionally, the indication information of the $N_2$ frequency domain units includes a position of each frequency domain unit, or the indication information may include at least one of a start position of a frequency domain unit, a frequency domain unit offset, and a quantity of frequency domain units.

Optionally, the indication information of the $N_3$ time domain units includes a position of each time domain unit, or the indication information may include at least one of a start position of a time domain unit, a time domain unit offset, and a quantity of time domain units.

Optionally, the first indication information further includes a frequency domain offset and/or a time domain offset between a second time-frequency-space unit group and the first time-frequency-space unit group, and the second time-frequency-space unit group is a time-frequency-space unit group other than the first time-frequency-space unit group in the at least one time-frequency-space unit group.

Optionally, the first indication information further includes: indication information of a position of a first reference time-frequency-space unit and indication information of a position of a second reference time-frequency-space unit, the first reference time-frequency-space unit is a time-frequency-space unit in the first time-frequency-space unit group, the second reference time-frequency-space unit is a time-frequency-space unit in a second time-frequency-space unit group, and the second time-frequency-space unit group is a time-frequency-space unit group other than the first time-frequency-space unit group in the at least one time-frequency-space unit group.

Optionally, the channel statistics information includes a channel covariance matrix and/or a channel eigenvector.

Optionally, the second indication information includes indication information of K space-time-frequency units, where $K \geq 1$, and K is an integer.

Optionally, the second indication information includes positions of K space domain units, positions of K frequency domain units, and positions of K time domain units, where K≥1, K is an integer, and K≤$N_1 \times N_2 \times N_3$.

Optionally, the second indication information includes a first bitmap and indication information of a third time-frequency-space unit group, and the first bitmap indicates positions of K space domain units in the third time-frequency-space unit group, where K≥1, and K is an integer.

Optionally, the second indication information is determined based on the channel statistics information. In this implementation, the network device may determine, based on the channel statistics information reported by the terminal device, the position in which the terminal device sends the uplink reference signal, to avoid a waste of time-frequency resources caused because the terminal device needs to send a large quantity of pilots.

Optionally, one part of the first time-frequency-space unit group is on a TDD frequency band, and the other part is on an FDD downlink frequency band. In this implementation, the downlink reference signal may be sent on different frequency bands.

Optionally, the K time-frequency-space units are on the TDD frequency band, and the channel state information includes at least one of the following: channel state information of the TDD frequency band or channel state information of the FDD downlink frequency band. In this implementation, when the uplink reference signal is sent on the TDD frequency band, a part of the downlink reference signal is sent on the TDD frequency band, and the other part is sent on the FDD frequency band. Because of partial reciprocity of FDD, downlink channel state information of the FDD frequency band or uplink channel state information of the TDD frequency band and downlink channel state information of the TDD frequency band may be determined.

It should be understood that, for a specific process of performing the foregoing corresponding steps by the units in the communication apparatus 900, refer to related descriptions of the network device in the related embodiments with reference to the method 600 and FIG. 6. For example, the transceiver unit 910 may perform receiving and sending steps in the foregoing method embodiment, and the processing unit 920 may perform steps other than receiving and sending. Various specific processing is described in the method embodiment. For brevity, details are not described herein again.

It should be understood that the communication apparatus may further include a storage unit. The storage unit is configured to store instructions executed by the transceiver unit 910 and the processing unit 920. The transceiver unit 910, the processing unit 920, and the storage unit are coupled to each other. The storage unit stores the instructions. The processing unit 920 is configured to execute the instructions stored in the storage unit. The transceiver unit 910 is configured to send or receive a specific signal under driving of the processing unit 920.

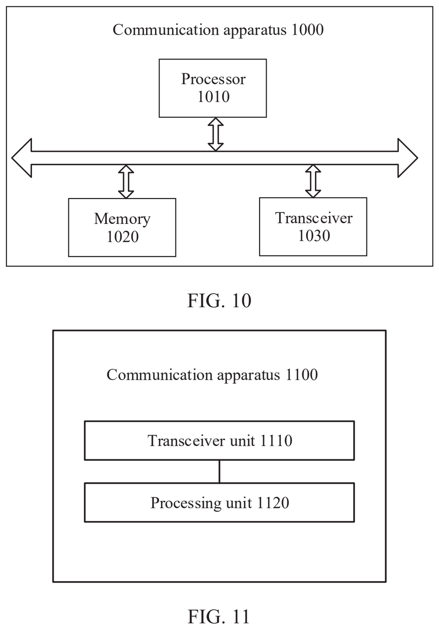

It should be understood that, the transceiver unit 910 may be a transceiver, an input/output interface, or an interface circuit. The storage unit may be a memory. The processing unit 920 may be implemented by a processor. FIG. 10 is a block diagram of another communication apparatus 1000 according to an embodiment of this application. As shown in FIG. 10, the communication apparatus 1000 may include a processor 1010, a memory 1020, and a transceiver 1030.

The communication apparatus 900 shown in FIG. 9 or the communication apparatus 1000 shown in FIG. 10 can implement the steps performed by the network device in the method 600. For similar descriptions, refer to the descriptions in the foregoing corresponding method. To avoid repetition, details are not described herein again.

It should be further understood that the communication apparatus 900 shown in FIG. 9 or the communication apparatus 1000 shown in FIG. 10 may be the network device.

FIG. 11 is a block diagram of a communication apparatus 1100 according to an embodiment of this application. The communication apparatus 1100 may correspond to the terminal device described in the method 600, or may be a chip or a component used in the terminal device. In addition, modules or units in the communication apparatus 1100 are separately configured to perform actions or processing processes performed by the terminal device in the method 600.

As shown in FIG. 11, the communication apparatus 1100 may include a transceiver unit 1110 and a processing unit 1120. The transceiver unit 1110 is configured to specifically send or receive a signal under driving of the processing unit 1120.

In some embodiments:

the transceiver unit 1110 is configured to receive first indication information, where the first indication information indicates a position for sending a downlink reference signal;

the transceiver unit 1110 is further configured to send channel statistics information, where the channel statistics information is determined based on the downlink reference signal;

the transceiver unit 1110 is further configured to receive second indication information, where the second indication information indicates a position for sending an uplink reference signal; and

the processing unit 1120 is configured to send the uplink reference signal based on the second indication information.

The communication apparatus provided in this application receives the downlink reference signal based on the position that is indicated by a network device and that is for sending the downlink reference signal, and determines the channel statistics information based on the received downlink reference signal. Then, the terminal device sends the uplink reference signal to the network device based on the position that is indicated by the network device and that is for sending the uplink reference signal, to resolve a problem of a waste of time-frequency resources caused because the terminal device needs to send a large quantity of reference channels. The terminal device may send the channel statistics information to the network device, so that the network device can determine the channel state information based on the uplink reference signal and the channel statistics information sent by the terminal device, to alleviate a high requirement for calculation complexity of the terminal device.

Optionally, in the apparatus 1100, the first indication information includes indication information of at least one time-frequency-space unit group, indication information of a first time-frequency-space unit group includes at least one of the following: indication information of $N_1$ space domain units, indication information of $N_2$ frequency domain units, and indication information of $N_3$ time domain units, and the first time-frequency-space unit group is any one of the at least one time-frequency-space unit group, where $N_1 \geq 1$, $N_1$ is an integer, $N_2 \geq 1$, $N_2$ is an integer, $N_3 \geq 1$, and $N_3$ is an integer. In this implementation, the network device may send indication information of a time-frequency-space unit group to the terminal device, so that the terminal device can determine the position in which the network device sends the downlink reference signal.

Optionally, the indication information of the $N_1$ space domain units may indicate a combination of a transmit port and a receive port corresponding to each space domain unit, or indicate a combination of a reference signal port and a receive port corresponding to each space domain unit; or the indication information of the $N_1$ space domain units may indicate only a transmit port corresponding to each space domain unit, or indicate a reference signal port corresponding to each space domain unit.

Optionally, the indication information of the $N_2$ frequency domain units includes a position of each frequency domain unit, or the indication information may include at least one of a start position of a frequency domain unit, a frequency domain unit offset, and a quantity of frequency domain units.

Optionally, the indication information of the $N_3$ time domain units includes a position of each time domain unit, or the indication information may include at least one of a start position of a time domain unit, a time domain unit offset, and a quantity of time domain units.

Optionally, the first indication information further includes a frequency domain offset and/or a time domain offset between a second time-frequency-space unit group and the first time-frequency-space unit group, and the second time-frequency-space unit group is a time-frequency-space unit group other than the first time-frequency-space unit group in the at least one time-frequency-space unit group.

Optionally, the first indication information further includes: indication information of a position of a first reference time-frequency-space unit and indication information of a position of a second reference time-frequency-space unit, the first reference time-frequency-space unit is a time-frequency-space unit in the first time-frequency-space unit group, the second reference time-frequency-space unit is a time-frequency-space unit in a second time-frequency-space unit group, and the second time-frequency-space unit group is a time-frequency-space unit group other than the first time-frequency-space unit group in the at least one time-frequency-space unit group.

Optionally, the channel statistics information includes a channel covariance matrix and/or a channel eigenvector.

Optionally, the second indication information includes indication information of K space-time-frequency units, where $K \geq 1$, and K is an integer.

Optionally, the second indication information includes positions of K space domain units, positions of K frequency domain units, and positions of K time domain units, where $K \geq 1$, K is an integer, and $K \leq N_1 \times N_2 \times N_3$.

Optionally, the second indication information includes a first bitmap and indication information of a third time-frequency-space unit group, and the first bitmap indicates positions of K space domain units in the third time-frequency-space unit group, where $K \geq 1$, and K is an integer.

Optionally, the second indication information is determined based on the channel statistics information. In this implementation, the network device may determine, based on the channel statistics information reported by the terminal device, the position in which the terminal device sends the uplink reference signal, to avoid a waste of time-frequency resources caused because the terminal device needs to send a large quantity of pilots.

Optionally, one part of the first time-frequency-space unit group is on a TDD frequency band, and the other part is on an FDD downlink frequency band. In this implementation, the downlink reference signal may be sent on different frequency bands.

Optionally, the K time-frequency-space units are on the TDD frequency band, and the channel state information includes at least one of the following: channel state information of the TDD frequency band or channel state information of the FDD downlink frequency band. In this implementation, when the uplink reference signal is sent on the TDD frequency band, a part of the downlink reference signal is sent on the TDD frequency band, and the other part is sent on the FDD frequency band. Because of partial reciprocity of FDD, downlink channel state information of the FDD frequency band or uplink channel state information of the TDD frequency band and downlink channel state information of the TDD frequency band may be determined.

It should be understood that, for a specific process of performing the foregoing corresponding steps by the units in the communication apparatus 1100, refer to related descriptions of the terminal device in the related embodiments with reference to the method 600 and FIG. 6. For example, the transceiver unit 1110 may perform receiving and sending steps in the foregoing method embodiment, and the processing unit 1120 may perform steps other than receiving and sending. Various specific processing is described in the method embodiment. For brevity, details are not described herein again.

It should be understood that the communication apparatus may further include a storage unit. The storage unit is configured to store instructions executed by the transceiver unit 1110 and the processing unit 1120. The transceiver unit 1110, the processing unit 1120, and the storage unit are coupled to each other. The storage unit stores the instructions. The processing unit 1120 is configured to execute the instructions stored in the storage unit. The transceiver unit 1110 is configured to send or receive a specific signal under driving of the processing unit 1120.

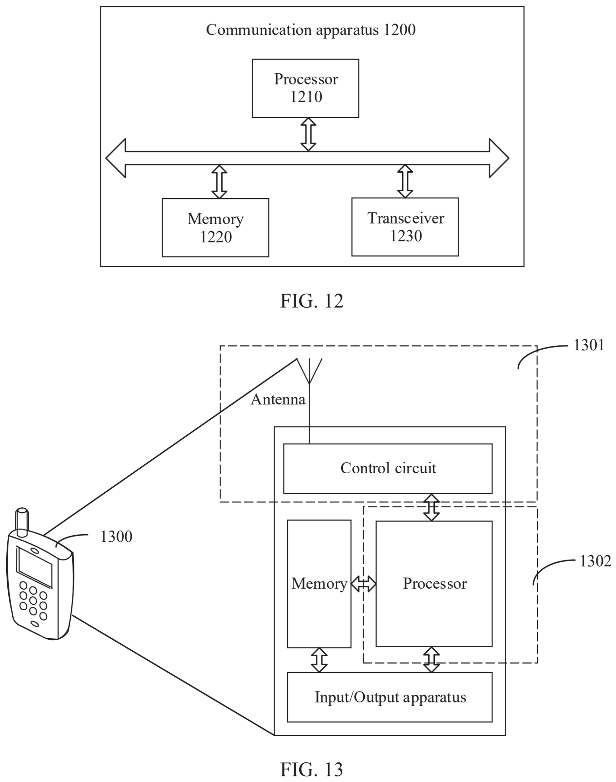

It should be understood that, the transceiver unit 1110 may be a transceiver, an input/output interface, or an interface circuit. The storage unit may be a memory. The processing unit 1120 may be implemented by a processor. FIG. 12 is a block diagram of another communication apparatus 1200 according to an embodiment of this application. As shown in FIG. 12, the communication apparatus 1200 may include a processor 1210, a memory 1220, and a transceiver 1230.

The communication apparatus 1100 shown in FIG. 11 or the communication apparatus 1200 shown in FIG. 12 can implement the steps performed by the terminal device in the method 600. For similar descriptions, refer to the descriptions in the foregoing corresponding method. To avoid repetition, details are not described herein again.

It should be further understood that the communication apparatus 1100 shown in FIG. 11 or the communication apparatus 1200 shown in FIG. 12 may be the terminal device.

It should be further understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element.

In an example, a unit in any one of the foregoing apparatuses may be one or more integrated circuits configured to implement the foregoing methods, for example, one or more application specific integrated circuits (application specific integrated circuit, ASIC), one or more digital signal processors (digital signal processor, DSP), one or more field programmable gate arrays (field programmable gate array, FPGA), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SoC).

FIG. 13 is a diagram of a structure of a terminal device 1300 according to an embodiment of this application. The communication apparatus 1100 or the communication apparatus 1200 may be configured in the terminal device 1300. Alternatively, the communication apparatus 1100 or the communication apparatus 1200 may be the terminal device 1300. In other words, the terminal device 1300 may perform an action performed by the terminal device in the method 600. Optionally, for ease of description, FIG. 13 shows only main components of the terminal device. As shown in FIG. 13, the terminal device 1300 includes a processor, a memory, a control circuit, an antenna, and an input/output apparatus.

The processor is mainly configured to: process a communication protocol and communication data, control an entire terminal device, execute a software program, and process data of the software program, for example, is configured to support the terminal device in performing the actions described in the foregoing embodiments of the indication method for transmitting a precoding matrix. The memory is mainly configured to store the software program and the data, for example, store a codebook described in the foregoing embodiment. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, such as a touchscreen, a display, or a keyboard, is mainly configured to: receive data input by a user and output data to the user.

After the terminal device is powered on, the processor may read the software program in the storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends a radio frequency signal in an electromagnetic wave form through the antenna. When data is sent to the terminal device, the radio frequency circuit receives a radio frequency signal through the antenna, converts the radio frequency signal into a baseband signal, and outputs the baseband signal to the processor. The processor converts the baseband signal into data and processes the data.

A person skilled in the art may understand that, for ease of description, FIG. 13 shows only one memory and one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 13 integrates functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, and the terminal device may include a plurality of central processing units to enhance a processing capability of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have a transceiver function may be considered as a transceiver unit 1301 of the terminal device 1300, and the processor having a processing function may be considered as a processing unit 1302 of the terminal device 1300. As shown in FIG. 13, the terminal device 1300 includes the transceiver unit 1301 and the processing unit 1302. The transceiver unit may also be referred to as a transceiver, a transceiver machine, a transceiver apparatus, or the like. Optionally, a component configured to implement a receiving function in the transceiver unit 1301 may be considered as a receiving unit, and a component configured to implement a sending function in the transceiver unit 1301 may be considered as a sending unit. That is, the transceiver unit 1301 includes the receiving unit and the sending unit. For example, the receiving unit may also be referred to as a receiver, a receive machine, or a receiving circuit, and the sending unit may also be referred to as a transmitter, a transmit machine, or a transmitting circuit.

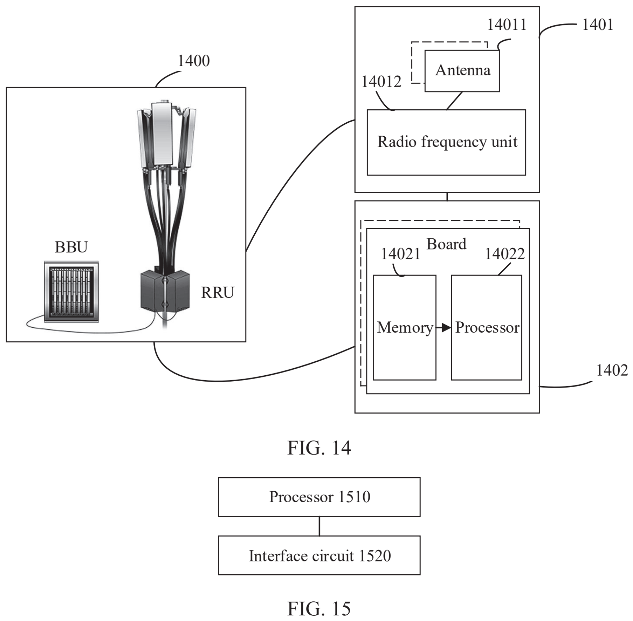

FIG. 14 is a diagram of a structure of a network device 1400 according to an embodiment of this application. The network device may be configured to implement functions of the network device in the foregoing method. The network device 1400 includes one or more radio frequency units, for example, a remote radio unit (remote radio unit, RRU) 1401, and one or more baseband units (baseband unit, BBU) (which may also be referred to as a digital unit (digital unit, DU)) 1402. The RRU 1401 may be referred to as a transceiver unit, a transceiver machine, a transceiver circuit, a transceiver, or the like, and may include at least one antenna 14011 and a radio frequency unit 14012. The RRU 1401 is mainly configured to: receive or send a radio frequency signal, and perform conversion between a radio frequency signal and a baseband signal, for example, configured to send a signaling message in the foregoing embodiment to a terminal device. The BBU 1402 is mainly configured to: perform baseband processing, control a base station, and the like. The RRU 1401 and the BBU 1402 may be physically disposed together; or may be physically disposed separately, in other words, in a distributed base station.

The BBU 1402 is a control center of the base station, may also be referred to as a processing unit, and is mainly configured to complete a baseband processing function, for example, channel coding, multiplexing, modulation, or spectrum spreading. For example, the BBU (the processing unit) 1402 may be configured to control the base station to perform an operation procedure related to the network device in the foregoing method embodiments.

In an example, the BBU 1402 may include one or more boards. A plurality of boards may jointly support a radio access network (for example, an LTE system or a 5G system) of a single access standard, or may separately support radio access networks of different access standards. The BBU 1402 further includes a memory 14021 and a processor 14022. The memory 14021 is configured to store necessary instructions and data. For example, the memory 14021 stores a codebook and the like in the foregoing embodiments. The processor 14022 is configured to control the base station to perform a necessary action, for example, is configured to control the base station to perform an operation procedure related to the network device in the foregoing method embodiment. The memory 14021 and the processor 14022 may serve one or more boards. In other words, a memory and a processor may be disposed on each board. Alternatively, a plurality of boards may share a same memory and a same processor. In addition, a necessary circuit may be further disposed on each board.

In a possible implementation, with development of a system-on-chip (system-on-chip, SoC) technology, all or some functions of the components 1402 and 1401 may be implemented by using the SoC technology, for example, implemented by using one base station function chip. The base station function chip integrates components such as a processor, a memory, and an antenna port. A program of a base station-related function is stored in the memory. The processor executes the program to implement the base station-related function. Optionally, the base station function chip can also read from an external memory of the chip, to implement the base station-related function.

It should be further understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element. In an example, a unit in any one of the foregoing apparatuses may be one or more integrated circuits configured to implement the foregoing methods, for example, one or more application specific integrated circuits (application specific integrated circuit, ASIC), one or more digital signal processors (digital signal processor, DSP), one or more field programmable gate arrays (field programmable gate array, FPGA), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SoC).

An embodiment of this application further provides a chip system. As shown in FIG. 15, the chip system includes at least one processor 1510 and at least one interface circuit 1520. The processor 1510 and the interface circuit 1520 may be interconnected through a line. For example, the interface circuit 1520 may be configured to receive a signal from another apparatus (for example, a memory of a terminal device). For another example, the interface circuit 1520 may be configured to send a signal to another apparatus (for example, a processor). For example, the interface circuit 1520 may read instructions stored in a memory, and send the instructions to the processor 1510. When the instructions are executed by the processor 1510, the terminal device performs the steps performed by the terminal device in the foregoing embodiments. Certainly, the chip system may further include another discrete component. This is not specifically limited in this embodiment of this application.

An embodiment of this application further provides a channel state information determining system. The system includes the network device (for example, a base station) and the terminal device (for example, a mobile phone) provided in the foregoing method embodiment.

An embodiment of this application further provides a computer-readable storage medium, configured to store computer program code. The computer program includes instructions used to perform any method for determining channel state information provided in the foregoing embodiments of this application. The readable medium may be a read-only memory (read-only memory, ROM) or a random access memory (random access memory, RAM). This is not limited in this embodiment of this application.

This application further provides a computer program product. The computer program product includes instructions. When the instructions are executed, a network device and a terminal device are enabled to perform corresponding operations in the foregoing method.

An embodiment of this application further provides a chip disposed in a communication apparatus. The chip includes a processing unit and a communication unit. The processing unit may be, for example, a processor, and the communication unit may be, for example, an input/output interface, a pin, or a circuit. The processing unit may execute computer instructions, so that the communication apparatus performs any method for determining channel state information provided in the foregoing embodiments of this application.

Optionally, the computer instructions are stored in a storage unit.

Optionally, the storage unit is a storage unit in the chip, for example, a register or a cache. Alternatively, the storage unit may be a storage unit that is in the terminal and that is located outside the chip, for example, a ROM, another type of static storage device that can store static information and instructions, or a random RAM. Any processor described above may be a CPU, a microprocessor, an ASIC, or one or more integrated circuits configured to control program execution of the feedback information transmission method. The processing unit and the storage unit may be decoupled, are disposed on different physical devices respectively, and are connected in a wired or wireless manner to implement respective functions of the processing unit and the storage unit, to support the system chip in implementing various functions in the foregoing embodiments. Alternatively, the processing unit and the memory may be coupled to the same device.

The terminal device, the computer-readable storage medium, the computer program product, or the chip provided in embodiments is configured to perform the corresponding method provided above. Therefore, for beneficial effects that can be achieved, refer to the beneficial effects of the corresponding method provided above. Details are not described herein again.

It may be understood that the memory in this embodiment of this application may be a volatile memory or a non-volatile memory, or may include a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. There are a plurality of different types of RAMs, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In this application, names may be assigned to various objects such as messages/ information/devices/network elements/systems/apparatuses/actions/operations/procedures/concepts. It may be understood that the specific names do not constitute a limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation is outside the scope of this application.

All or some of the methods in embodiments of this application may be implemented by software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, or other programmable apparatuses. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a readable storage medium, and includes several instructions for enabling a computer device (which may be a personal computer, a server, or a network device) to perform all or some of the steps of the method described in embodiments of this application. The readable storage medium includes any medium that can store program code, for example, a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for determining channel state information, wherein the method comprises:

   sending first indication information, wherein the first indication information indicates a position for sending a downlink reference signal;
   receiving channel statistics information, wherein the channel statistics information is determined based on the downlink reference signal;
   sending second indication information, wherein the second indication information indicates a position for sending an uplink reference signal; and
   receiving the uplink reference signal, and determining channel state information based on the uplink reference signal and the channel statistics information.

2. A method for determining channel state information, wherein the method comprises:

   receiving first indication information, wherein the first indication information indicates a position for sending a downlink reference signal;
   sending channel statistics information, wherein the channel statistics information is determined based on the downlink reference signal;
   receiving second indication information, wherein the second indication information indicates a position for sending an uplink reference signal; and
   sending the uplink reference signal based on the second indication information.

3. The method according to claim 1 or 2, wherein the first indication information comprises indication information of at least one time-frequency-space unit group, indication information of a first time-frequency-space unit group comprises at least one of the following: indication information of $N_1$ space domain units, indication information of $N_2$ frequency domain units, and indication information of $N_3$ time domain units, and the first time-frequency-space unit group is any one of the at least one time-frequency-space unit group, wherein $N_1 \geq 1$, $N_1$ is an integer, $N_2 \geq 1$, $N_2$ is an integer, $N_3 \geq 1$, and $N_3$ is an integer.

4. The method according to claim 3, wherein the indication information of the $N_2$ frequency domain units comprises a position of each frequency domain unit, or at least one of a start position of a frequency domain unit, a frequency domain unit offset, and a quantity of frequency domain units.

5. The method according to claim 3, wherein the indication information of the $N_3$ time domain units comprises a position of each time domain unit, or at least one of a start position of a time domain unit, a time domain unit offset, and a quantity of time domain units.

6. The method according to any one of claims 3 to 5, wherein the first indication information further comprises a frequency domain offset and/or a time domain offset between a second time-frequency-space unit group and the first time-frequency-space unit group, and the second time-frequency-space unit group is a time-frequency-space unit group other than the first time-frequency-space unit group in the at least one time-frequency-space unit group.

7. The method according to any one of claims 3 to 5, wherein the first indication information further comprises: indication information of a position of a first reference time-frequency-space unit and indication information of a position of a second reference time-frequency-space unit, the first reference time-frequency-space unit is a time-frequency-space unit in the first time-frequency-space unit group, the second reference time-frequency-space unit is a time-frequency-space unit in a second time-frequency-space unit group, and the second time-frequency-space unit group is a time-frequency-space unit group other than the first time-frequency-space unit group in the at least one time-frequency-space unit group.

8. The method according to any one of claims 3 to 7, wherein the channel statistics information comprises a channel covariance matrix and/or a channel eigenvector.

9. The method according to any one of claims 3 to 8, wherein the second indication information comprises indication information of K time-frequency-space units, K≥1, and K is an integer.

10. The method according to any one of claims 3 to 9, wherein the second indication information comprises indication information of K space domain units, indication information of K frequency domain units, and indication information of K time domain units, K≥1, and K is an integer.

11. The method according to any one of claims 1 to 9, wherein the second indication information comprises a first bitmap and indication information of a third time-frequency-space unit group, the first bitmap indicates positions of K space domain units in the third time-frequency-space unit group, K≥1, and K is an integer.

12. The method according to any one of claims 1 to 11, wherein the second indication information is determined based on the channel statistics information.

13. The method according to claim 9 or 10, wherein one part of the first time-frequency-space unit group is on a TDD frequency band, and the other part is on an FDD downlink frequency band.

14. The method according to claim 13, wherein the K time-frequency-space units are on the TDD frequency band, and the channel state information comprises at least one of the following: channel state information of the TDD frequency band or channel state information of the FDD downlink frequency band.

15. A communication apparatus, wherein the communication apparatus comprises:

a sending unit, wherein the sending unit is configured to send first indication information, and the first indication information indicates a position for sending a downlink reference signal;
a receiving unit, wherein the receiving unit is configured to receive channel statistics information, and the channel statistics information is determined based on the downlink reference signal, wherein
the sending unit is further configured to send second indication information, wherein the second indication information indicates a position for sending an uplink reference signal; and
a processing unit, configured to determine channel state information based on the received uplink reference signal and the channel statistics information.

16. A communication apparatus, wherein the communication apparatus comprises:

a receiving unit, wherein the receiving unit is configured to receive first indication information, and the first indication information indicates a position for sending a downlink reference signal; and
a sending unit, wherein the sending unit is configured to send channel statistics information, and the channel statistics information is determined based on the downlink reference signal, wherein
the receiving unit is further configured to receive second indication information, wherein the second indication information indicates a position for sending an uplink reference signal; and
the sending unit is further configured to send the uplink reference signal based on the second indication information.

17. The apparatus according to claim 15 or 16, wherein the first indication information comprises indication information of at least one time-frequency-space unit group, indication information of a first time-frequency-space unit group comprises at least one of the following: indication information of $N_1$ space domain units, indication information of $N_2$ frequency domain units, and indication information of $N_3$ time domain units, and the first time-frequency-space unit group is any one of the at least one time-frequency-space unit group, wherein $N_1 \geq 1$, $N_1$ is an integer, $N_2 \geq 1$, $N_2$ is an integer, $N_3 \geq 1$, and $N_3$ is an integer.

18. The apparatus according to claim 17, wherein the indication information of the $N_2$ frequency domain units comprises a position of each frequency domain unit, or at least one of a start position of a frequency domain unit, a frequency domain unit offset, and a quantity of frequency domain units.

19. The apparatus according to claim 17, wherein the indication information of the $N_3$ frequency domain units comprises a position of each time domain unit, or at least one of a start position of a time domain unit, a time domain unit offset, and a quantity of time domain units.

20. The apparatus according to any one of claims 17 to 19, wherein the first indication information further comprises a frequency domain offset and/or a time domain offset between a second time-frequency-space unit group and the first time-frequency-space unit group, and the second time-frequency-space unit group is a time-frequency-space unit group other than the first time-frequency-space unit group in the at least one time-frequency-space unit group.

21. The apparatus according to any one of claims 17 to 19, wherein the first indication information further comprises: indication information of a position of a first reference time-frequency-space unit and indication information of a position of a second reference time-frequency-space unit, the first reference time-frequency-space unit is a time-frequency-space unit in the first time-frequency-space unit group, the second reference time-frequency-space unit is a time-frequency-space unit in a second time-frequency-space unit group, and the second time-frequency-space unit group is a time-frequency-space unit group other than the first time-frequency-space unit group in the at least one time-frequency-space unit group.

22. The apparatus according to any one of claims 17 to 21, wherein the channel statistics information comprises a channel covariance matrix and/or a channel eigenvector.

23. The apparatus according to any one of claims 17 to 22, wherein the second indication information comprises indication information of K time-frequency-space units, K≥1, and K is an integer.

24. The apparatus according to any one of claims 17 to 23, wherein the second indication information comprises indication information of K space domain units, indication information of K frequency domain units, and indication information of K time domain units, K≥1, and K is an integer.

25. The apparatus according to any one of claims 15 to 23, wherein the second indication information comprises a first bitmap and indication information of a third time-frequency-space unit group, the first bitmap indicates positions of K space domain units in the third time-frequency-space unit group, K≥1, and K is an integer.

26. The apparatus according to any one of claims 15 to 25, wherein the second indication information is determined based on the channel statistics information.

27. The apparatus according to claim 23 or 24, wherein one part of the first time-frequency-space unit group is on a TDD frequency band, and the other part is on an FDD downlink frequency band.

28. The apparatus according to claim 27, wherein the K time-frequency-space units are on the TDD frequency band, and the channel state information comprises at least one of the following: channel state information of the TDD frequency band or channel state information of the FDD downlink frequency band.

29. A computer-readable storage medium, wherein the computer-readable storage medium stores a computer program or instructions, and when a computer reads and executes the computer program or the instructions, the computer is enabled to perform the method according to any one of claims 1 to 14.

30. A chip, comprising a processor, configured to perform the method according to any one of claims 1 to 14.

FIG. 1

FIG. 2

FIG. 3

FIG. 4

EP 4 727 069 A1

Network device

RRC module ←———— RRC signaling ————→ RRC module

MAC module ←———— MAC-CE signaling ————→ MAC module

PHY module ————— PDCCH and PDSCH ————→ PHY module

PHY module ←———— PUCCH and PUSCH ————— 

Terminal device

FIG. 5

Method 600

```
┌─────────────────────┐                    ┌─────────────────────┐
│   Network device    │                    │   Terminal device   │
└─────────────────────┘                    └─────────────────────┘
```

S610: Send first indication information, where the first indication information indicates a position in which the network device sends a downlink reference signal →

S620a: Receive the downlink reference signal based on the first indication information, and determine channel statistics information based on the downlink reference signal

← S620b: Send the channel statistics information

S630a: Determine, based on the channel statistics information, a position in which the terminal device sends an uplink reference signal

S630b: Send second indication information, where the second indication information indicates the position for sending the uplink reference signal →

← S640a: Send the uplink reference signal to the network device based on the second indication information

S640b: Determine channel state information based on the channel statistics information and the uplink reference signal

FIG. 6

FIG. 7

FIG. 8

FIG. 9

Communication apparatus 1000

Processor
1010

Memory
1020

Transceiver
1030

FIG. 10

Communication apparatus 1100

Transceiver unit 1110

Processing unit 1120

FIG. 11

FIG. 12

FIG. 13

FIG. 14

FIG. 15

## INTERNATIONAL SEARCH REPORT

| International application No. |
| --- |
| **PCT/CN2024/096791** |

**A. CLASSIFICATION OF SUBJECT MATTER**

H04L25/02(2006.01)i; H04B 7/06(2006.01)i

According to International Patent Classification (IPC) or to both national classification and IPC

**B. FIELDS SEARCHED**

Minimum documentation searched (classification system followed by classification symbols)

IPC: H04L H04W H04B

Documentation searched other than minimum documentation to the extent that such documents are included in the fields searched

Electronic data base consulted during the international search (name of data base and, where practicable, search terms used)

CNTXT, VCN, DWPI, ENTXT, CNKI, 3GPP: 下行参考信号, 第一参考信号, 第二参考信号, 上行参考信号, 位置, 时域, 频域, 时频, 视频空, 指示, 信道状态信息, 信道质量信息, 协方差矩阵, 特征项量, CSI-R, SRS, CSI, covariance matrix, eigenterm quantity, time, domain, frequency, indicat+

**C. DOCUMENTS CONSIDERED TO BE RELEVANT**

| Category* | Citation of document, with indication, where appropriate, of the relevant passages | Relevant to claim No. |
| --- | --- | --- |
| PX | CN 117544452 A (HUAWEI TECHNOLOGIES CO., LTD.) 09 February 2024 (2024-02-09) description, paragraphs [0190]-[0257] | 1-30 |
| PX | CN 118057769 A (HUAWEI TECHNOLOGIES CO., LTD.) 21 May 2024 (2024-05-21) description, paragraphs [0091]-[0122] | 1-30 |
| X | CN 107733549 A (HUAWEI TECHNOLOGIES CO., LTD.) 23 February 2018 (2018-02-23) description, paragraphs [0234]-[0334] | 1-30 |
| A | CN 113258974 A (DATANG MOBILE COMMUNICATIONS EQUIPMENT CO., LTD.) 13 August 2021 (2021-08-13) entire document | 1-30 |
| A | WO 2022067662 A1 (QUALCOMM INC.) 07 April 2022 (2022-04-07) entire document | 1-30 |
| A | ZTE. "R1-1712294, On reciprocity based CSI acquisition" *3GPP TSG RAN WG1 Meeting #90.* 25 August 2017 (2017-08-25), Sections 2-3 | 1-30 |

☐ Further documents are listed in the continuation of Box C.　　☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **05 September 2024** | **11 September 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/096791**

| Patent document cited in search report | | | Publication date (day/month/year) | Patent family member(s) | | | Publication date (day/month/year) |
|---|---|---|---|---|---|---|---|
| CN | 117544452 | A | 09 February 2024 | WO | 2024027400 | A1 | 08 February 2024 |
| CN | 118057769 | A | 21 May 2024 | None | | | |
| CN | 107733549 | A | 23 February 2018 | WO | 2018028540 | A1 | 15 February 2018 |
| | | | | EP | 3493438 | A1 | 05 June 2019 |
| | | | | US | 2019166514 | A1 | 30 May 2019 |
| | | | | IN | 201917005905 | A | 26 April 2019 |
| CN | 113258974 | A | 13 August 2021 | WO | 2021160122 | A1 | 19 August 2021 |
| | | | | MX | 2022009173 | A1 | 17 August 2022 |
| | | | | BR | 112022015632 | A2 | 27 September 2022 |
| | | | | KR | 20220131993 | A | 29 September 2022 |
| | | | | VN | 90368 | A | 25 October 2022 |
| | | | | EP | 4106221 | A1 | 21 December 2022 |
| | | | | UA | 2023075037 | A1 | 09 March 2023 |
| | | | | JP | 2023513713 | A | 03 April 2023 |
| WO | 2022067662 | A1 | 07 April 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310685530